# EUROPEAN PATENT APPLICATION

(11) **EP 4 738 135 A1**
(43) Date of publication of application: **06.05.2026**
(21) Application number: 24832498.0
(22) Date of filing: 28.06.2024
(51) Int. Cl.: G06F 13/38, G06F 13/14

(54) **METHOD AND DEVICE FOR BIDIRECTIONAL COMMUNICATION FOR HYDROGEN FUELING**

(30) Priority: 28.06.2023 KR 20230083285
(71) Applicant: Hyundai Motor Company, Seoul 06797 (KR); Kia Corporation, Seoul 06797 (KR); Myongji University Industry and Academia Cooperation Foundation, Gyeonggi-do 54538 (KR)
(72) Inventor: SHIN, Min Ho, Yongin-si, Gyeonggi-do 17058 (KR); YOON, A Eun, Hwaseong-si, Gyeonggi-do 18280 (KR); SHIN, Ye Eun, Hwaseong-si, Gyeonggi-do 18280 (KR); KIM, Hyung Ki, Hwaseong-si, Gyeonggi-do 18280 (KR)
(74) Representative: Hoffmann Eitle
(86) International application number: PCT/KR2024/009091
(87) International publication number: WO 2025/005721

(57) **Abstract**

This method for bidirectional communication for hydrogen fueling comprises the steps of: negotiating a communication protocol with a dispenser for fueling hydrogen mobility with hydrogen, the communication protocol being negotiated on the basis of interoperability or compatibility-related information checked in advance with the dispenser; negotiating a fueling protocol; negotiating a fueling parameter on the basis of the fueling protocol; and, after hydrogen fueling is started on the basis of the negotiated fueling protocol and the negotiated fueling parameter, monitoring the state of the hydrogen fueling via fueling loop request messages and fueling loop response messages.

## Description

### [Technical Field]

The present disclosure relates to a communication technology for processing hydrogen fueling from a hydrogen/refueling station or a dispenser to hydrogen mobility, and, more specifically, relates to a bidirectional communication method for a hydrogen fueling process and a device utilizing the bidirectional communication method, the hydrogen fueling process being capable of improving safety, compatibility, efficiency, and reliability of hydrogen fueling.

### [Background Art]

The content described in this portion merely provides background information regarding exemplary embodiments and does not provide related art.

Hydrogen mobility means mobility that uses hydrogen as an energy source or generates electric energy by using hydrogen as fuel and drives an electric motor by using the generated electric energy. Hydrogen mobility includes hydrogen cars, hydrogen electric cars, industrial trucks, trains, ships, aircraft, aerial mobility, or the like, and refers to all devices that generate electric energy by using hydrogen as fuel and drive by using the generated electric energy. Hydrogen mobility is referred to as hydrogen-fuelled mobility or hydrogen-powered mobility, and, in the case of vehicles, hydrogen mobility is generally classified into hydrogen electric cars and hydrogen-fuelled cars.

A hydrogen electric car means a zero-emission vehicle that moves by electric energy generated when high-pressure hydrogen stored in a vehicle meets air in the atmosphere. A hydrogen electric car is also referred to as a hydrogen fuel cell vehicle, a fuel cell electric vehicle (FCEV), or simply a hydrogen car. Most hydrogen electric cars generate electricity by using a fuel cell system that utilizes hydrogen as an energy source, and move by driving a motor with the generated electricity. A hydrogen electric car emits only pure water (H2O) in the process of generating electricity and has a function of removing ultrafine dust in the atmosphere during driving, and therefore attracts attention as future eco-friendly mobility.

A hydrogen-fuelled car is a vehicle that uses hydrogen as fuel, but, unlike a hydrogen electric car, drives a vehicle motor with heat generated by directly combusting hydrogen in an internal combustion engine (ICE). A hydrogen fueling method for a hydrogen-fuelled car is not significantly different from a hydrogen fueling method for a hydrogen electric car.

The above-described hydrogen mobility has been widely recognized as a technology having potential to be utilized across industries in that hydrogen as fuel is infinite on Earth and a process of producing energy is eco-friendly.

Meanwhile, in order to use hydrogen mobility, hydrogen mobility or a user thereof needs to charge hydrogen fuel into a hydrogen tank of hydrogen mobility at a hydrogen/refueling station that provides a hydrogen fueling service and needs to pay hydrogen fueling cost. In particular, a hydrogen fueling process, a control technique, or a protocol therefor is being automated through computing techniques, and, in such an automated environment, importance of security in hydrogen fueling communication between hydrogen infrastructure and hydrogen mobility is increasing.

For example, in a general automated control technique for supplying hydrogen fuel to a vehicle that uses hydrogen as fuel, a final goal is to control temperature and pressure of a compressed hydrogen storage system (CHSS) for safety of hydrogen fueling under a limit temperature and a limit pressure condition of the CHSS.

The above-described hydrogen fueling process, control technique, and protocol for a hydrogen electric car are provisions made when past wired/wireless communication technologies or computing techniques for control were not mature and therefore do not properly reflect recent achievements of information and communications technology (ICT). Therefore, a conventional hydrogen fueling technology for a hydrogen electric car is inefficient, slow, and not suitable for large-capacity hydrogen fueling.

In particular, in hydrogen fueling communication, in the case of wireless communication, most hydrogen fueling control devices utilize a unidirectional infrared communication device. Therefore, a conventional wireless-based hydrogen fueling communication still has limitations and vulnerabilities of unidirectional communication. As described above, there is a need for a new scheme for current hydrogen fueling communication.

### [Disclosure]

### [Technical Problem]

The present disclosure has been derived to solve problems of the related art described above, and an object of the present disclosure is to provide a hydrogen fueling bidirectional communication method and a device capable of overcoming limitations and vulnerabilities of conventional unidirectional communication in a communication protocol for a hydrogen fueling process or a hydrogen fueling process of hydrogen mobility and capable of improving safety, compatibility, efficiency, and reliability of hydrogen fueling.

Another object of the present disclosure is to provide a hydrogen fueling bidirectional communication method and a device capable of allowing hydrogen mobility and a dispenser to select a legacy communication medium or an advanced communication medium in order to effectively achieve a hydrogen fueling goal.

Still another object of the present disclosure is to provide a hydrogen fueling bidirectional communication method and a device capable of handling an error and/or an emergency occurring in a communication protocol negotiation for a hydrogen fueling process, a fueling protocol negotiation, a fueling parameter negotiation, a safety check-in, monitoring and control, a safety check-out, and a termination.

### [Technical Solution]

According to an exemplary embodiment of the present disclosure, a method for bidirectional communication for hydrogen fueling performed by hydrogen mobility comprises: negotiating, with a dispenser that supplies hydrogen to the hydrogen mobility and based on interoperability or compatibility information identified in advance, a communication protocol for a process of supplying hydrogen to the mobility; negotiating, with the dispenser, fueling protocols for hydrogen fueling; negotiating, with the dispenser, fueling parameters based on the negotiated fueling protocols; and monitoring, based on the negotiated fueling protocols and the negotiated fueling parameters, a start of the hydrogen fueling and a state of the hydrogen fueling through a fueling loop request message and a fueling loop response message.

In the monitoring, the fueling loop request message comprises a field for a current action and a field indicating a reason for the action, and the hydrogen fueling is started according to preset information of the field for the action.

In the monitoring, the fueling loop response message comprises fields indicating a state, a reason, and a result for the current action. The state field comprises information indicating that a current state corresponds to fueling, and the result field comprises information indicating that a monitoring result or a control state is normal.

The monitoring may comprise transmitting, to the dispenser, a message including information regarding a fueling loop of the hydrogen mobility and receiving, from the dispenser, a message including information regarding a fueling loop of the dispenser corresponding to the fueling loop of the mobility.

The monitoring may comprise transmitting, to the dispenser, a fueling control request message including information for delaying fueling or reducing a unit fueling amount and receiving, from the dispenser, a response message including information indicating a decrease or reduction of a fueling state or fueling speed.

The monitoring may comprise transmitting, to the dispenser, a fueling control request message requesting stop of fueling and receiving, from the dispenser, a fueling state response message including information indicating that fueling is being stopped or has been stopped.

The monitoring may comprise transmitting, to the dispenser, information or parameters regarding a current tank temperature and a current tank pressure of the hydrogen mobility and receiving, from the dispenser, parameters related to one or more of fueling start, fueling stop, ramping up, ramping down, or a current injection pressure.

The monitoring may comprise transmitting, to the dispenser, information or parameters regarding start, pause, resume, or terminate of fueling.

The monitoring may comprise receiving, from the dispenser, a reporting message including information or parameters including one or more of status information, a current ambient temperature, a current pressure ramp rate, a delivered fuel flow rate, a current fueling delivery temperature, a precooling temperature, a current fueling delivery pressure, whether a cooling dispenser is used, whether a fallback mode is used, a reason for fueling stop, or an amount of hydrogen supplied during the hydrogen fueling.

The monitoring may comprise receiving, from the dispenser, information or parameters including one or more of a target final tank pressure, a target final tank temperature, a target average pressure ramp rate for the fueling, a target fueling amount, a current fueling amount, or an estimated remaining duration.

The monitoring may comprise transmitting the fueling loop request message to the dispenser within a message sequence setup time after receiving, from the dispenser, a fueling parameter negotiation response message, when TCP is used in the monitoring and control procedure or when a safety check-in procedure is omitted based on a safety check-in response message or the fueling protocol.

In the monitoring, the fueling loop request message or the fueling loop response message may be a transport layer security (TLS) message or a datagram transport layer security (DTLS) message.

The method may further comprise transmitting, to the dispenser, information for controlling parameters including a pressure ramp rate or an average pressure ramp rate to control a fueling rate in the hydrogen fueling.

The method may further comprise detecting an error occurring in a communication process for preparing the hydrogen fueling or in a process in which the dispenser supplies hydrogen to the hydrogen mobility.

The detected error may be classified as a safety-critical error or a non-safety-critical error.

The method may further comprise determining, based on the detected error, whether to stop the communication process or the hydrogen fueling process and transmitting, to the dispenser, a message including information indicating whether the communication process or the hydrogen fueling process is to be stopped.

The method may further comprise performing an error-handling procedure, based on the detected error being the non-safety-critical error.

The performing of the error-handling procedure may comprise classifying the detected error as one or more of a communication error, a system error, or a qualitative error.

The method may further comprise determining whether to replace a first fueling protocol used for the communication process or the hydrogen fueling process with a fallback second fueling protocol, based on the detected error being the non-safety-critical error.

The method may further comprise performing an emergency-handling procedure, based on the detected error being the safety-critical error.

The method may further comprise transmitting, to the dispenser, a safety check-in request message within a message sequence setup time after receiving the fueling parameter negotiation response message from the dispenser through the fueling parameter negotiation.

The method may further comprise checking whether a nozzle and a receptacle are fixed or whether leakage exists through a safety check-in procedure including transmitting the safety check-in request message.

The method may further comprise reporting, to the dispenser, parameters regarding a current status or immobilization status of the mobility and receiving, from the dispenser, parameters regarding a coupler lock status, a leak check status, or an estimated mobility tank capacity in the safety check-in procedure beginning with the transmission of the safety check-in request message.

The method may further comprise: receiving, from the dispenser, a fueling loop response message in which a result field is set to "OK," a status field is set to "finished," or a prefix of the state indicates "stopped"; transmitting, to the dispenser, a message including information regarding a coupler check result and receiving, from the dispenser, a message including information indicating that the coupler check is in progress; and transmitting, to the dispenser, a message including the coupler check completion information and receiving, from the dispenser, a message including the coupler check completion notification.

The method may further comprise receiving, from the dispenser and after receiving the fueling loop response message, a reporting message including information or parameters regarding a coupler release state, wherein the coupler release state includes one or more of locked, unlocked, icing, or problem.

According to another exemplary embodiment of the present disclosure, a method for bidirectional communication for hydrogen fueling performed by a dispenser supplying hydrogen to hydrogen mobility or a hydrogen refueling station including the dispenser comprises: negotiating, with the hydrogen mobility and based on interoperability or compatibility information identified in advance, a communication protocol for a process of supplying hydrogen to the mobility; negotiating, with the hydrogen mobility, fueling protocols for hydrogen fueling; negotiating, with the hydrogen mobility and based on the negotiated fueling protocols, fueling parameters; and monitoring, based on the negotiated fueling protocols and the negotiated fueling parameters, a start of the hydrogen fueling and a state of the hydrogen fueling through a fueling loop request message and a fueling loop response message.

In the monitoring, the fueling loop request message comprises a field indicating a current action and may optionally comprise a field indicating a reason for the action, and the hydrogen fueling may be started according to preset information of the field for the action.

In the monitoring, the fueling loop response message may comprise fields indicating a state and a result of the current action, wherein the state field comprises information indicating that the current state corresponds to fueling, and the result field may comprise information indicating that a monitoring result or a control state is normal.

The monitoring may comprise receiving, from the hydrogen mobility, a message including information regarding a fueling loop of the hydrogen mobility and transmitting, to the hydrogen mobility, a message including information regarding a fueling loop of the dispenser corresponding to the fueling loop of the mobility.

The monitoring may comprise receiving, from the hydrogen mobility, a fueling control request message including information for delaying fueling or reducing a unit fueling amount and transmitting, to the hydrogen mobility, a response message including information indicating a decrease or reduction of a fueling state or fueling speed.

The monitoring may comprise receiving, from the hydrogen mobility, a fueling control request message requesting stop of fueling and transmitting, to the hydrogen mobility, a fueling state response message including information indicating that fueling is being stopped or has been stopped.

The monitoring may comprise receiving, from the hydrogen mobility, information or parameters regarding a current tank temperature and a current tank pressure of the hydrogen mobility and transmitting, to the hydrogen mobility, parameters related to one or more of fueling start, fueling stop, ramping up, ramping down, or a current injection pressure.

The monitoring may comprise receiving, from the hydrogen mobility, information or parameters regarding start, pause, resume, or terminate of fueling.

The monitoring may comprise transmitting, to the hydrogen mobility, a reporting message including information or parameters including one or more of status information, a current ambient temperature, a current pressure ramp rate, a delivered fuel flow rate, a current fueling delivery temperature, a precooling temperature, a current fueling delivery pressure, whether a cooling dispenser is used, whether a fallback mode is used, a reason for fueling stop, or an amount of hydrogen supplied during the hydrogen fueling.

The monitoring may comprise transmitting, to the hydrogen mobility, a reporting message including information or parameters regarding one or more of a target final tank pressure, a target final tank temperature, a target average pressure ramp rate for the fueling, a target fueling amount, a current fueling amount, or an estimated remaining duration.

The monitoring may comprise receiving, from the hydrogen mobility within a message sequence setup time, the fueling loop request message after transmitting, to the hydrogen mobility, a fueling parameter negotiation response message, when TCP is used in the monitoring and control procedure, or when a safety check-in procedure is omitted based on a safety check-in response message or the fueling protocol.

In the monitoring, the fueling loop request message or the fueling loop response message may be a transport layer security (TLS) message or a datagram transport layer security (DTLS) message.

The method may further comprise controlling parameters including a pressure ramp rate or an average pressure ramp rate to control a fueling rate in the hydrogen fueling.

The method may further comprise detecting an error occurring in a communication process for preparing the hydrogen fueling or in a process in which the dispenser supplies hydrogen to the hydrogen mobility, wherein the detected error is classified as a safety-critical error or a non-safety-critical error.

The method may further comprise receiving, from the hydrogen mobility, a message including information or parameters indicating whether the communication process or the hydrogen fueling process is to be stopped based on the detected error.

The method may further comprise performing an error-handling procedure, based on the detected error being the non-safety-critical error, wherein the performing of the error-handling procedure comprises classifying the detected error as one or more of a communication error, a system error, or a qualitative error.

The method may further comprise determining whether to replace a first fueling protocol used for the communication process or the hydrogen fueling process with a fallback second fueling protocol, based on the detected error being the non-safety-critical error.

The method may further comprise performing an emergency-handling procedure, based on the detected error being the safety-critical error.

The method may further comprise receiving, from the hydrogen mobility within the message sequence setup time, a safety check-in request message after transmitting the fueling parameter negotiation response message to the hydrogen mobility through the fueling parameter negotiation.

The method may further comprise checking whether a nozzle and a receptacle are fixed or whether leakage exists through a safety check-in procedure including receiving the safety check-in request message.

The method may further comprise receiving, from the hydrogen mobility, parameters regarding a current status or immobilization status of the mobility and transmitting, to the hydrogen mobility, parameters regarding a coupler lock status, a leak check status, or an estimated mobility tank capacity in the safety check-in procedure beginning with receiving the safety check-in request message.

The method may further comprise: transmitting, to the hydrogen mobility, a fueling loop response message in which a result field is set to "OK," a status field is set to "finished," or a prefix of the state indicates "stopped"; receiving, from the hydrogen mobility, a message including information regarding a coupler check result and transmitting, to the hydrogen mobility, a message including information indicating that the coupler check is in progress; and receiving, from the hydrogen mobility, a message including the coupler check completion result and transmitting, to the hydrogen mobility, a message including a coupler check completion notification.

The method may further comprise transmitting, to the hydrogen mobility after transmitting the fueling loop response message, a reporting message including information or parameters regarding a coupler release state, wherein the coupler release state comprises one or more of locked, unlocked, icing, or problem.

According to another exemplary embodiment of the present disclosure, a hydrogen fueling bidirectional communication device disposed in hydrogen mobility comprises: a memory storing at least one instruction; and a processor executing the at least one instruction. The processor is configured to, based on the at least one instruction, negotiate, with a dispenser that supplies hydrogen to the hydrogen mobility and based on interoperability or compatibility information identified in advance, a communication protocol for a process of supplying hydrogen to the mobility; negotiate, with the dispenser, fueling protocols for hydrogen fueling; negotiate, with the dispenser and based on the negotiated fueling protocols, fueling parameters; and monitor, based on the negotiated fueling protocols and the negotiated fueling parameters, a start of the hydrogen fueling and a state of the hydrogen fueling through a fueling loop request message and a fueling loop response message.

The fueling loop request message comprises a field indicating a current action and a field indicating a reason for the action, and the hydrogen fueling is started according to preset information of the field for the action.

The fueling loop response message comprises fields indicating a state, a reason, and a result for the current action, wherein the state field comprises information indicating that the current state corresponds to fueling, and the result field comprises information indicating that a monitoring result or a control state is normal.

The processor may further be configured to detect an error occurring in a communication process for preparing the hydrogen fueling or in a process in which the dispenser supplies hydrogen to the hydrogen mobility; determine, based on the detected error, whether to stop the communication process or the hydrogen fueling process; perform an error-handling procedure, based on the detected error being a non-safety-critical error; and perform an emergency-handling procedure, based on the detected error being a safety-critical error.

In detecting or determining the error, the detected error is classified as a safety-critical error or a non-safety-critical error.

Based on the detected error being the non-safety-critical error, the performing of the error-handling procedure comprises classifying the detected error as one or more of a communication error, a system error, or a qualitative error.

Further, based on the detected error being the non-safety-critical error, the performing of the error-handling procedure may comprise determining whether to replace a first fueling protocol used for the communication process or the hydrogen fueling process with a fallback second fueling protocol.

### [Advantageous Effects]

According to the above-described hydrogen fueling bidirectional communication method and device, limitations and vulnerabilities of conventional unidirectional communication in a hydrogen fueling process of hydrogen mobility and a communication protocol therefor may be overcome, and safety, compatibility, efficiency, and reliability of hydrogen fueling may be improved.

In addition, according to the present disclosure, communication protocol negotiation for hydrogen fueling, fueling protocol negotiation, fueling parameter negotiation, and rules for communication protocol fallback may be provided, the communication protocol negotiation, the fueling protocol negotiation, the fueling parameter negotiation, and the communication protocol fallback being for selecting a communication protocol required to execute a protocol for hydrogen fueling by considering a priority according to a preference of hydrogen mobility or a dispenser, maximizing interoperability between hydrogen mobility and the dispenser, and considering backward compatibility.

In addition, according to the present disclosure, rules and procedures required for communication protocol negotiation, fueling protocol negotiation, and fueling parameter negotiation may be provided so that hydrogen mobility and the dispenser cooperate and effectively determine a legacy communication medium or an advanced communication medium in order to effectively achieve a fueling goal.

### [Description of Drawings]

FIG. 1 is a conceptual diagram of a hydrogen fueling system including hydrogen mobility to which a hydrogen fueling bidirectional communication method according to an exemplary embodiment of the present disclosure may be applied.
FIG. 2 is a partially enlarged view for describing a physical coupling structure between a fuel cell electric vehicle (FCEV) and a dispenser in the hydrogen fueling system of FIG. 1.
FIG. 3 is a conceptual diagram for describing a hydrogen fueling control process that may be applied to the hydrogen fueling system of FIG. 1.
FIG. 4 is a graph illustrating a change in a state of hydrogen fuel appearing in the hydrogen fueling control process of FIG. 3.
FIG. 5 is an exemplary diagram illustrating a framework of functional blocks of a hydrogen fueling procedure to which the hydrogen fueling bidirectional communication method according to an exemplary embodiment of the present disclosure may be applied.
FIG. 6 is an exemplary diagram illustrating a reference model based on an OSI (open systems interconnection) seven-layer model with respect to a communication stack related to each use case of FIG. 5 to which the hydrogen fueling bidirectional communication method according to an exemplary embodiment of the present disclosure may be applied.
FIG. 7 is an exemplary diagram illustrating a JSON (JavaScript object notation) message format that may be applied to a presentation layer or a session layer among the communication stack of FIG. 6.
FIG. 8 is an exemplary diagram for describing a communication protocol negotiation request message that may be applied to a communication protocol negotiation procedure and a functional block thereof among the framework of functional blocks of a hydrogen fueling procedure of FIG. 5 (hereinafter, simply referred to as a "fueling framework").
FIG. 9 is an exemplary diagram illustrating a JSON message format of the communication protocol negotiation request message of FIG. 8.
FIG. 10 is an exemplary diagram for describing a communication protocol negotiation response message in a communication protocol negotiation procedure that may be applied to the fueling framework of FIG. 5 and a functional block thereof.
FIG. 11 is an exemplary diagram illustrating a JSON message format of the communication protocol negotiation request message of FIG. 10.
FIG. 12 is an exemplary diagram for describing a fueling protocol negotiation request message that may be applied to a fueling protocol negotiation procedure and a functional block thereof of the fueling framework of FIG. 5.
FIG. 13 is an exemplary diagram illustrating a JSON message format of the fueling protocol negotiation request message of FIG. 12.
FIG. 14 is an exemplary diagram for describing a fueling protocol negotiation response message that may be applied to the fueling protocol negotiation procedure and a functional block thereof of the fueling framework of FIG. 5.
FIG. 15 is an exemplary diagram illustrating a JSON message format of the fueling protocol negotiation response message of FIG. 14.
FIG. 16 is an exemplary diagram for describing a fueling parameter negotiation request message that may be applied to a fueling parameter negotiation procedure and a functional block thereof of the fueling framework of FIG. 5.
FIG. 17 is an exemplary diagram for describing a fueling parameter negotiation response message that may be applied to the fueling parameter negotiation procedure and a functional block thereof of the fueling framework of FIG. 5.
FIG. 18 is an exemplary diagram illustrating a JSON message format of the fueling parameter negotiation request message of FIG. 16 or the fueling parameter negotiation response message of FIG. 17.
FIG. 19 is an exemplary diagram for describing a safety check-in request message that may be applied to a safety check-in procedure and a functional block thereof of the fueling framework of FIG. 5.
FIG. 20 is an exemplary diagram for describing a safety check-in response message that may be applied to the safety check-in procedure and a functional block thereof of the fueling framework of FIG. 5.
FIG. 21 is an exemplary diagram for describing a monitoring and control request message that may be applied to a monitoring and control procedure and a functional block thereof of the fueling framework of FIG. 5.
FIG. 22 is an exemplary diagram illustrating a JSON message format of the monitoring and control request message of FIG. 21.
FIG. 23 is an exemplary diagram for describing a monitoring and control response message that may be applied to the monitoring and control procedure and a functional block thereof of the fueling framework of FIG. 5.
FIG. 24 is an exemplary diagram illustrating a JSON message format of the monitoring and control response message of FIG. 23.
FIG. 25 is an exemplary diagram for describing a safety check-out request message that may be applied to a safety check-out procedure and a functional block thereof of the fueling framework of FIG. 5.
FIG. 26 is an exemplary diagram for describing a safety check-out response message that may be applied to the safety check-out procedure and a functional block thereof of the fueling framework of FIG. 5.
FIG. 27 is an exemplary diagram for describing a termination request message that may be applied to a termination procedure and a functional block thereof of the fueling framework of FIG. 5.
FIG. 28 is an exemplary diagram illustrating a JSON message format of the termination request message of FIG. 27.
FIG. 29 is an exemplary diagram for describing a termination response message that may be applied to the termination procedure and a functional block thereof of the fueling framework of FIG. 5.
FIG. 30 is an exemplary diagram illustrating a JSON message format of the termination response message of FIG. 29.
FIG. 31 is an exemplary diagram illustrating a JSON message format of an error handling message that may be applied to an error handling procedure and a functional block thereof of the fueling framework of FIG. 5.
FIG. 32 is an exemplary diagram illustrating a JSON message format of an emergency handling message that may be applied to an emergency handling procedure and a functional block thereof of the fueling framework of FIG. 5.
FIG. 33 is a framework of functional blocks of a hydrogen fueling procedure to which the hydrogen fueling bidirectional communication method according to another exemplary embodiment of the present disclosure may be applied.
FIG. 34 is a conceptual block diagram of a computing system that may be applied to a hydrogen fueling communication device according to still another exemplary embodiment of the present disclosure.
FIG. 35 is a block diagram for describing software modules of a hydrogen fueling communication device that may be additionally employed in the computing system of FIG. 34.

### [Best mode of the Invention]

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

A hydrogen-fueled vehicle may broadly include not only a fuel cell electric vehicle (FCEV) using a fuel cell, but also a vehicle based on an internal combustion engine (ICE) that directly uses hydrogen as fuel. In this specification, the hydrogen-fueled vehicle may be referred to as a hydrogen electric vehicle or simply a hydrogen vehicle.

Hydrogen mobility may include hydrogen-fueled mobility that uses hydrogen as an energy source or uses hydrogen as fuel to generate electric energy and drive a motor using the electric energy. The hydrogen mobility may include, in addition to the hydrogen vehicle, an industrial truck, a train, a ship, an aircraft, an aerial mobility platform, or an apparatus configured to generate electric energy using hydrogen as fuel and operate using the electric energy. The hydrogen mobility may further include a conventional automobile, an automobile using human power together with hydrogen fuel, or a hybrid mobility system. In the embodiments described hereinafter, a fueling protocol and/or a communication protocol for hydrogen fueling may be applied to the hydrogen mobility. Hydrogen fluid fuel may include gaseous hydrogen fuel or liquid hydrogen fuel.

"Compressed Hydrogen Storage System (CHSS)": An apparatus including one or more of tank mounted on a vehicle to compress or store the hydrogen.

"Pressure Relief Device (PRD)": A device disposed in the CHSS and capable of isolating stored hydrogen from the other part of the fueling system and environment and exhausting the hydrogen to the outside.

"Pressure Ramp Rate (PRR)": An increase rate of a pressure of CHSS and measured in mega-pascals per minute (MPa/min). "Average Pressure Ramp Rate (APRR)": An average of the increase rate of the pressure from the beginning to the end of the hydrogen fueling.

"Precooling": A process of cooling the hydrogen in a hydrogen fueling station before the fueling. "Dispenser": A component supplying precooled hydrogen to the CHSS. The dispenser may be arranged at the hydrogen fueling station to perform a hydrogen fueling operation between the hydrogen storage tank of the hydrogen fueling station and the CHSS of the vehicle. "Nozzle": A device that is connected to a hydrogen dispensing system of the hydrogen fueling station and may be coupled to a receptacle of the hydrogen electric vehicle and to supply the hydrogen fuel to the hydrogen electric vehicle.

The above-described hydrogen fueling generally refers to a process of supplying high-pressure hydrogen from a dispenser of a gas station or a hydrogen station and compressing and storing the hydrogen in a fuel tank of a vehicle. The hydrogen fueling may be used interchangeably with fueling in the context of supplying hydrogen fuel to a hydrogen electric vehicle. That is, in this specification, the term "fueling" may refer to supplying or charging fuel, and the charging may refer to charging hydrogen fuel. For example, a fueling protocol may be referred to as a charging protocol, a fueling session may be referred to as a charging session, and a fueling method may be referred to as a hydrogen fueling method or simply a charging (fueling) method.

"Fueling session": A communication session occurring over an entire range of use cases for the hydrogen fueling.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

The correlation or association process may include a process of establishing a relationship between two peer communication entities.

"Command and control communications": Communications for exchanging information required for initiating, controlling, and terminating a hydrogen fueling process between a hydrogen dispenser and a hydrogen fueled mobility.

A client, as a term related to transport layer security (TLS), may refer to an endpoint that initiates a TLS connection. A connection may mean a transport-layer connection between two endpoints. An endpoint is either the client or the server of a connection. A handshake is an initial negotiation between the client and the server in TLS that sets parameters for subsequent interactions.

In addition, as a term related to TLS, a peer may refer to an endpoint. That is, when a particular endpoint is being discussed, a "peer" denotes the endpoint that is not the primary subject of the discussion. A receiver is an endpoint that receives records. A sender is an endpoint that transmits records. A server may be an endpoint that does not initiate the TLS connection.

Meanwhile, although embodiments related to hydrogen electric vehicles or fuel cell electric vehicles (FCEVs) are described in detail below, it will be apparent to those skilled in the art that the spirit of the present disclosure may be applied to various types of hydrogen mobility. In addition, the bidirectional communication process for hydrogen fueling according to the present disclosure may be partially applicable not only to hydrogen-fueled mobility but also to a building or a facility using hydrogen as an energy source.

In the following description, some or all of communication procedures such as a communication protocol negotiation, a fueling protocol negotiation, and a fueling parameter negotiation performed by the hydrogen mobility may be performed by an electronic control unit (ECU), a communication device, or a communication controller of the hydrogen mobility.

In addition, some or all of communication procedures such as the communication protocol negotiation, the fueling protocol negotiation, and the fueling parameter negotiation performed by the dispenser may be performed by a controller, an electronic control unit, a communication device, or a communication controller of the dispenser. Further, some of processes of the above methods may be performed by a controller, an electronic control unit, a communication device, or a communication controller of a fueling station associated with the dispenser.

Meanwhile, even technology that has been publicly known before the filing date of the present application may, if necessary, be included as a part of the configuration of the present invention, and such technology will be described in this specification to an extent that does not obscure the spirit of the present invention. However, in describing the configuration of the present invention, detailed description of matters that are already publicly known before the filing date of the present application and can be readily understood by those skilled in the art may be omitted because such detailed description may obscure the spirit of the present invention. The spirit of the present invention is not to claim rights to such conventional technologies themselves, and the contents of the conventional technologies may be included as a part of the present invention only within a scope that does not depart from the spirit of the present invention.

For example, in the case of unidirectional communication, infrared data association (IrDA) technology may be used, in the case of bidirectional communication, short-range wireless communication technologies such as Bluetooth, a wireless local area network (WLAN), and ultra-wideband (UWB) may be used, and wired communication technology for unidirectional or bidirectional communication may be used. Such technologies known before the filing of the present application may be employed, and at least some of these conventional technologies may be applied as base technologies necessary for implementing the present disclosure.

Hereinafter, preferred embodiments of the present disclosure will be described in detail with reference to the accompanying drawings.

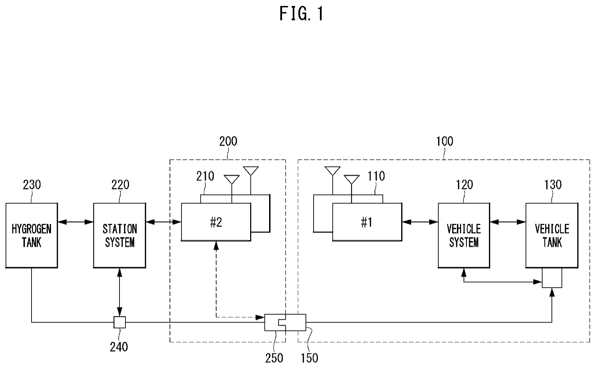

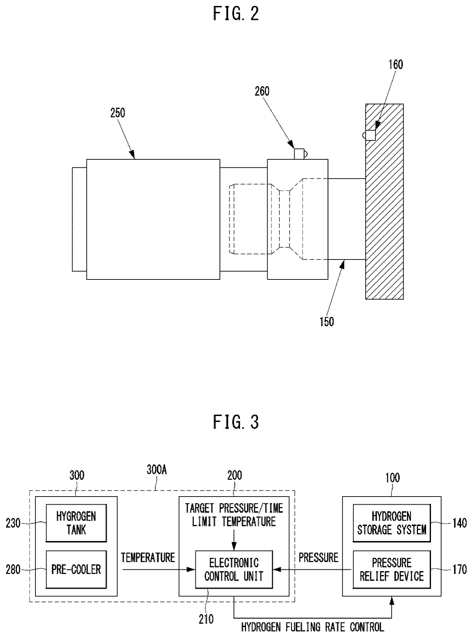

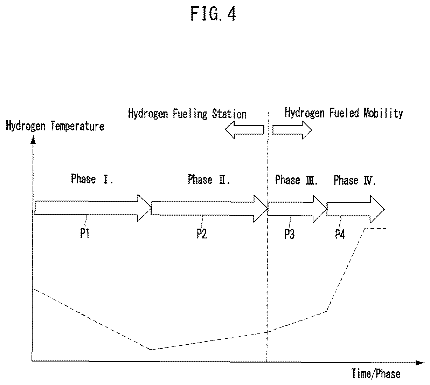

FIG. 1 is a conceptual diagram of a hydrogen fueling system to which a hydrogen fueling bidirectional communication method according to an exemplary embodiment of the present disclosure may be applied. FIG. 2 is a partially enlarged view for describing a physical coupling structure between a fuel cell electric vehicle (FCEV) and a dispenser in the hydrogen fueling system of FIG. 1. FIG. 3 is a conceptual diagram for describing a hydrogen fueling control process that may be applied to the hydrogen fueling system of FIG. 1. FIG. 4 is a graph illustrating a change in a state of hydrogen fuel appearing in the hydrogen fueling control process of FIG. 3.

Referring to FIGS. 1 to 3, the hydrogen fueling system may have a form including a fuel cell electric vehicle 100, a dispenser 200, and a hydrogen/refueling station 300. In the hydrogen fueling system, the dispenser 200 may be included in the hydrogen/refueling station 300 in a broad sense, and, in that case, the hydrogen/refueling station may be referred to by a separate reference numeral 300A.

The fuel cell electric vehicle 100 may include, in addition to basic mechanical devices, mechanical structures, electrical devices, electronic devices, and communication devices required for a vehicle, an electronic control unit 110 for hydrogen fueling, a vehicle system 120, a vehicle tank 130, and a receptacle 150.

In the fuel cell electric vehicle 100, the electronic control unit 110 may be configured to transmit and receive signals and data in a wired or wireless manner with an electronic control unit of the hydrogen/refueling station 300 or an electronic control unit 210 of the dispenser 200 in order to receive hydrogen fueling from the dispenser 200, process the signals and data, and control at least a part of a hydrogen fueling process from the dispenser 200. The electronic control unit 110 may be configured as at least a portion of another electronic control unit mounted on the vehicle 100, or vice versa, and may be referred to as a first electronic control unit.

The vehicle system 120 may be connected to the first electronic control unit 110 and may be configured to charge or discharge hydrogen into or from the vehicle tank 130 and monitor a state of the vehicle tank 130 according to a signal or a command of the first electronic control unit 110. The vehicle system 120 may, depending on implementation, control an operation of a fuel cell system, include a configuration performing such control operation, or be configured to be combined with the configuration. The vehicle system 120 may also perform a vehicle safety function, and, in this case, may also be referred to as a vehicle safety system.

The vehicle tank 130 may be provided as at least one or a plurality, and, preferably, two vehicle tanks 130 may be provided. The vehicle tank 130 may store compressed hydrogen supplied from the hydrogen/refueling station 300 side under control of the vehicle system 120 and may discharge stored hydrogen. The vehicle tank 130 may correspond to at least a portion of a hydrogen storage system 140 attached to the vehicle 100.

The hydrogen storage system 140 may include a high-pressure hydrogen tank, a pressure control mechanism, a high-pressure pipe, and an outer frame. The high-pressure hydrogen tank may have a capacity of several tens to several hundreds of liters. In a case of a vehicle, the high-pressure hydrogen tank may have a form in which two small storage tanks are connected in parallel. The high-pressure hydrogen tank may be combined with a boss unit capable of controlling inflow and outflow of hydrogen gas and may control hydrogen gas charging and discharging through the boss unit. The boss unit may be provided with a valve, a pressure-reducing mechanism, and sensors for various measurements. The high-pressure hydrogen tank may correspond to the vehicle tank 130. The hydrogen storage system 140 may be referred to as a compressed hydrogen storage system (CHSS).

The above-described fuel cell electric vehicle 100 may include a fuel cell system including a fuel cell stack, but the fuel cell electric vehicle 100 is not limited thereto. The fuel cell electric vehicle 100 may be referred to as hydrogen-fuelled mobility or simply hydrogen mobility. For convenience of description, the fuel cell electric vehicle 100 may also be simply referred to as an FCEV, a vehicle, or mobility. In the following description, an object simply referred to as the vehicle or the mobility may be understood to include, in addition to the fuel cell electric vehicle 100, a hydrogen-fuelled vehicle that uses hydrogen as fuel and hydrogen-fuelled mobility.

The hydrogen/refueling station 300 may include the dispenser 200, the electronic control unit 210, a station system 220, a hydrogen tank 230, a station box 240, and a nozzle 250. The electronic control unit 210 may be referred to as a second electronic control unit. The hydrogen/refueling station 300 may further include a pre-cooler 280.

The dispenser 200 may supply hydrogen from the hydrogen tank 230 to the vehicle 100 through the nozzle 250 firmly coupled to the receptacle 150 of the vehicle under control of the station system 220. The dispenser 200 may include the electronic control unit 210 inside a housing of the dispenser 200, but the dispenser 200 is not limited thereto. The nozzle 250 may be installed at a terminal end of a fuel supply cable extending by a predetermined length to an outside of the housing of the dispenser 200.

The electronic control unit 210 may transmit and receive signals and data in a wired or wireless manner with the first electronic control unit 110 of the vehicle 100, process the signals and data, and control a hydrogen fueling procedure on a hydrogen/refueling station side in order to perform the hydrogen fueling procedure from the dispenser 200 to the fuel cell electric vehicle 100. The electronic control unit 210 may exchange preset signals and data with the station system 220. The electronic control unit 210 may be referred to as the second electronic control unit.

In addition, at least one controller or charging control logic for hydrogen fueling may be mounted in the dispenser 200 or the second electronic control unit 210. The at least one controller or the charging control logic may be used to control a hydrogen fueling process by using state information such as a temperature and a pressure of hydrogen fuel supplied from the dispenser 200 to the vehicle 100 or charged into the vehicle tank 130 and charging state information such as a state of charge (SOC) of the CHSS.

The above-described electronic control unit 210 may be a communication entity related to the dispenser 200 that communicates with the vehicle 100 or may be a separate communication device mounted in the dispenser 200. The electronic control unit 210 is not limited to the electronic control unit in the station system 220 and may include a communication entity that is a mobile communication device that has entered a communication region of the hydrogen/refueling station 300, is connected to the station system 220, or has acquired control authority.

Each of the first electronic control unit 110 and the second electronic control unit 210 may be configured of a plurality of electronic control units, and different electronic control units may be matched and operated for each communication protocol. In this case, the configuration may be useful when a fallback is performed for backward compatibility and when unidirectional communication is to be used without using bidirectional communication. The configuration may also be useful when the first electronic control unit 110 and the second electronic control unit 210 use a combination of different communication methods in a plurality of stages of a hydrogen fueling procedure, as in a case where NFC (near field communication) is used for pairing and WiFi is used for actual fueling.

The station system 220 may monitor or adjust a pressure, a speed, and a temperature of hydrogen discharged from the hydrogen tank 230 according to a signal and/or data of the second electronic control unit 210. To this end, the station system 220 may control an operation of the station box 240 connected to a discharge port or a discharge valve of the hydrogen tank 230. The station system 220 may also be referred to as a station safety system.

The hydrogen tank 230 stores hydrogen or compressed hydrogen. The hydrogen tank 230 may store hydrogen or compressed hydrogen and may discharge stored hydrogen at a predetermined pressure or flow rate under control of a predetermined component of the station system 220, for example, a safety management module. The hydrogen tank 230 may be referred to as a hydrogen storage tank.

The station box 240 may include a control valve having an inlet connected to the discharge port or the discharge valve of the hydrogen tank 230 and an outlet connected to the dispenser 200 or the nozzle 250 coupled to the dispenser 200. The station box 240 may also include means for adjusting the pressure, a flow rate, and a temperature of hydrogen discharged from the hydrogen tank 230 or a configuration performing a function corresponding to the means. For example, the station box 240 may include sensors for measuring the pressure, the flow rate/speed, and the temperature of hydrogen being discharged.

The nozzle 250 may have one end connected to a hydrogen fuel supply system of the dispenser 200 through a conduit or a flexible pipe having a predetermined length. The nozzle 250 may have a shape or a structure that airtightly and firmly engages with the receptacle of the vehicle 100 at the other end.

As shown in FIG. 2, the nozzle 250 may engage with the receptacle 150. In this case, a fastening state of the nozzle 250 and the receptacle 150 may be delivered as a preset signal or information to the first electronic control unit 110 or the vehicle system 120 and/or to the second electronic control unit 210 or the station system 220 by a first sensor 160 installed in the vehicle and a second sensor 260 attached to the nozzle 250.

Hydrogen fuel pre-cooled at the hydrogen/refueling station 300 may be supplied to the hydrogen storage system 140 of the fuel cell electric vehicle 100 through the nozzle 250 of the dispenser 200 and the receptacle 150 of the fuel cell electric vehicle 100. In this case, the hydrogen fueling process may be controlled based on parameters including a pressure rise rate (PRR) and/or an average pressure rise rate (APR).

While hydrogen fueling proceeds, in order to cope with a phenomenon in which a temperature of hydrogen gas increases (see FIG. 4), the hydrogen/refueling station 300 may further include the pre-cooler 280 in addition to the station system 220. The pre-cooler 280 lowers the temperature of hydrogen gas through pre-cooling. The pre-cooler 280 may be installed in or coupled to one or more of the hydrogen tank 230 or the station box 240. The pre-cooler 280 may, of course, be installed in or coupled to piping that transports hydrogen in the hydrogen/refueling station 300.

An interface between the hydrogen/refueling station 300 and the vehicle 100 may be handled by the dispenser 200. The dispenser 200 may be configured to control a target pressure and an injection speed for hydrogen fueling by synthesizing information indirectly acquired from the vehicle tank 130 and fueling information of the hydrogen/refueling station 300.

In addition, the station system 220 and/or the dispenser 200 may mount a protocol for supplying hydrogen fuel to the vehicle 100 according to a predetermined procedure. The fueling protocol may also be mounted in the vehicle 100. The fueling protocol mounted in the vehicle 100 or the dispenser 200 may include at least a portion of a communication protocol according to an SAE standard or an ISO standard, and vice versa.

For example, a method of delivering information from the vehicle 100 to the dispenser 200 may be classified into a communication method and a non-communication method. In a case of a conventional communication method, temperature and pressure values of the vehicle tank 130 of the vehicle 100 are simply delivered unidirectionally to the dispenser 200, and the dispenser 200 does not actively utilize the information and utilizes the information only as a safety criterion such as an emergency stop at a limit temperature and pressure. In addition, a hydrogen fueling protocol for safe and rapid fueling is managed by the dispenser 200, and the hydrogen fueling protocol has only a minimum safety management device that automatically discharges hydrogen through a pressure relief device (PRD) 170 without active safety management of the vehicle tank 130.

In this exemplary embodiment, through bidirectional communication, the dispenser 200 actively utilizes information such as a temperature and a pressure of the vehicle tank 130 of the vehicle 100 and safely and rapidly manages a hydrogen fueling procedure in such an environment. In particular, the dispenser 200 performs safety management with high reliability by actively managing the vehicle tank 130.

For minimum requirements for safety, simulations may be performed for various situations through thermodynamic modeling, and a table-based method or a partial real-time correction method based on a marginal cost formula (MC-formula) may be used by utilizing parameters derived through the simulations. The minimum requirements for safety may include an upper limit of temperature and pressure conditions of the CHSS and a guideline for the state of charge (SOC).

When state values related to hydrogen fueling are not actively controlled by the dispenser 200, in a table-based method, a temperature of pre-cooled hydrogen fuel provided from a gas station or a temperature of the vehicle tank 130 measured in the vehicle 100 are not utilized, and thus efficiency may become very low and flexible coping with a change in surrounding circumstances may be difficult. When state values related to hydrogen fueling are not actively controlled by the dispenser 200, in an MC-formula-based method, a temperature of pre-cooled hydrogen fuel is corrected in real time, but a calculation and application method are complicated and application has limitations, and thus expansion may be difficult. In hydrogen fueling, a communication protocol is developed with a main goal of safe completion of fueling and needs to be operated so as to actively control sudden situations such as excessive pre-cooling or overheating of the vehicle tank 130 and needs to be operated so as to promptly cope with errors such as an increase in operation cost caused by overcooling and a delay in fueling caused by overheating.

For example, when hydrogen fuel is charged into the vehicle tank 130 of FIG. 1, an internal temperature of the vehicle tank increases due to compression heat, and, as a result, a temperature of hydrogen fuel inside the vehicle tank increases. In order to block heat exchange between outside air and hydrogen fuel stored inside, the vehicle tank is configured so that a dome and a body of the vehicle tank are wrapped with carbon fiber having low heat transfer efficiency. Therefore, when a temperature of hydrogen fuel inside the vehicle tank increases during a fueling process, a temperature increase exposed on a surface of the vehicle tank may be insignificant compared with the increase in the internal temperature until a time point at which fueling is completed due to low heat transfer characteristics of the vehicle tank.

More specifically, temperature control of a hydrogen fueling process may have a goal of controlling an internal temperature of the vehicle tank to be 85° C. or less at a final fueling completion time point by receiving pre-cooled hydrogen gas. That is, as in a characteristic curve for a hydrogen temperature during hydrogen fueling shown in FIG. 4, a temperature of hydrogen fuel decreases at a constant rate in phase I (P1), which is a pre-cooling stage of the hydrogen/refueling station, the temperature of hydrogen fuel gradually increases due to a thermal mass of the hydrogen/refueling station in phase II (P2), which is a stage of supplying hydrogen fuel from the hydrogen/refueling station to hydrogen mobility such as the vehicle, the temperature of hydrogen fuel additionally gradually increases due to a thermal mass of the vehicle in phase III (P3), which is a stage of transferring hydrogen fuel from an inside of the vehicle to the vehicle tank, and the temperature of hydrogen fuel sharply increases due to compression heat in phase IV (P4), which is a stage of compressively storing hydrogen fuel in the vehicle tank, and the temperature of hydrogen fuel may change according to the stages.

Accordingly, a hydrogen fueling bidirectional communication process of this exemplary embodiment is configured to perform a hydrogen fueling procedure effectively, rapidly, and with high stability through active control of state variables reflecting real-time measured data, and may provide message formats of a protocol for bidirectional communication such as communication protocol negotiation, fueling protocol negotiation, fueling parameter negotiation, monitoring and control, and error handling for this purpose.

The above-described hydrogen fueling control process includes a process of supplying pre-cooled hydrogen gas from the hydrogen/refueling station 300 to hydrogen mobility 100 via the dispenser 200. Hydrogen fueling control may be performed by parameter control including a pressure rise rate (PRR) or an average pressure rise rate (APR) in order to control a fueling speed.

The dispenser 200, which is in charge of an interface between the hydrogen/refueling station 300 and hydrogen-fuelled mobility 100, controls a target pressure, a target time, a limit temperature, an injection speed, and the like in hydrogen fueling by synthesizing hydrogen fueling-related information (first information) such as an ambient temperature of the hydrogen/refueling station 300 and a delivered gas temperature and vehicle tank-related information (second information) such as an initial gas pressure of hydrogen mobility 100, and may use a control logic following an SAE J2601 standard as a control logic. The injection speed, that is, a hydrogen fueling speed, may be controlled based on the average pressure rise rate.

In addition, a hydrogen fueling controller 210 may be designed to operate at a maximum fueling speed satisfying conditions below a safety limit by controlling the hydrogen fueling speed in real time by using real-time temperature data of the vehicle tank 130. According to this configuration, hydrogen fueling time may be reduced within an available range. The hydrogen fueling controller 210 may be implemented based on an artificial neural network (ANN) having a structure already well known.

In particular, when a limit condition for safety is excessively set in a hydrogen fueling protocol and hydrogen gas is excessively pre-cooled and supplied to the vehicle 100, as in a case where a temperature of the vehicle tank 130 is measured around 40 to 50° C. at a time point of fueling completion, a problem in which precise control and/or stability or reliability deteriorates may occur. In this exemplary embodiment, by actively adjusting a required pre-cooling amount and a supplied pre-cooling amount and optimizing a cooling load of the hydrogen/refueling station 300, stability and reliability of a hydrogen fueling process may be increased and operation efficiency of the hydrogen/refueling station 300 may be improved.

In addition, in a conventional technology in which a protocol is set mainly for a small fuel cell electric vehicle or a light fuel cell electric vehicle, most variables need to be reset and applied when hydrogen fueling is performed for new mobility. In this exemplary embodiment, by applying ANN-based hydrogen fueling control logic that automatically updates logic through a predetermined learning and training process, a hydrogen fueling procedure may be effectively performed and controlled even for unfamiliar hydrogen-fuelled mobility, that is, new hydrogen mobility that is connected to the dispenser 200 for the first time.

In addition, a hydrogen fueling process may perform simulations through thermodynamic modeling for various situations in terms of minimum requirements for safety and may perform partial real-time correction based on an MC-formula protocol. Of course, depending on implementation, a table-based protocol may be applied in which a lookup table is configured by utilizing parameters derived through the simulations and an output of fueling is controlled by using the configured lookup table.

The above-described minimum requirements for safety may follow an upper limit of temperature and pressure conditions of a CHSS of the hydrogen storage system 140 and a guideline for a state of charge (SOC). The simulations may be performed through thermodynamic modeling using boundary conditions including a best case and a worst case.

The above-described configuration may also be applied to a configuration of an exemplary embodiment of the present disclosure within a range that meets an object of the present disclosure.

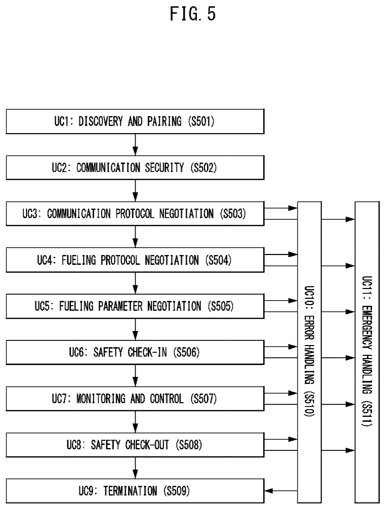

FIG. 5 is an exemplary diagram illustrating a framework of functional blocks of a hydrogen fueling procedure (hereinafter, also referred to as a "fueling framework") to which a hydrogen fueling bidirectional communication method according to an exemplary embodiment of the present disclosure may be applied.

Referring to FIG. 5, the fueling framework may include functional blocks for each use case (UC) for discovery and pairing, communication security, communication protocol negotiation, fueling protocol negotiation, fueling parameter negotiation, safety check-in, monitoring and control, safety check-out, termination, error handling, and emergency handling.

That is, the fueling framework may include, as functional blocks for each use case, a discovery and pairing functional block, a communication security functional block, a communication protocol negotiation functional block, a fueling protocol negotiation functional block, a fueling parameter negotiation functional block, a safety check-in functional block, a monitoring and control functional block, a safety check-out functional block, a termination functional block, an error handling functional block, and an emergency handling functional block.

Each functional block of the fueling framework corresponds to each of use cases UC1 to UC11 in the described order and may function as a subject performing time-series stages S501 to S511 of the use cases UC1 to UC11. Here, a tenth use case UC10 and an eleventh use case UC11 may be configured to be independently connected from a third use case UC3 to an eighth use case UC8 by the corresponding functional blocks and to perform error handling and/or emergency handling occurring in the corresponding use cases.

The above-described use cases UC1 to UC11 for hydrogen fueling may be configured to collectively process an overall hydrogen fueling procedure in a consistent manner for fueling communication in an atmosphere of safety and security. That is, a vehicle or a dispenser may perform most of the use cases UC3 to UC11 in various orders according to circumstances between the vehicle and the dispenser in order to achieve a stable and safe hydrogen fueling goal.

In addition, after a nozzle of the dispenser and a receptacle of the vehicle are fastened to each other, the vehicle and the dispenser may perform fueling communication for implementing each use case. However, the vehicle and the dispenser may omit a specific use case if necessary according to predefined requirements.

The above-described respective use cases may be implemented through communication between a control system of a dispenser that performs fueling to hydrogen mobility according to a fueling protocol for hydrogen mobility and the hydrogen mobility.

Meanwhile, hydrogen mobility (hereinafter, also simply referred to as "mobility" or "vehicle") that implements the above-described use cases and a dispenser may perform data exchange for vehicle identification in a first use case UC1. To this end, the vehicle may include sensors, an electric control unit (ECU), a transmitter, and a receiver. For bidirectional communication, the transmitter and the receiver may be provided integrally or separately. The integrally provided transmitter and receiver may be referred to as a transceiver.

The dispenser may be configured to receive specific data from the vehicle. The dispenser may store data for data logging or may store data designated in a station programmable logic controller (PLC) for use in a fueling protocol. Data logging may refer to a process of collecting and recording data for a predetermined time to analyze a specific operating state of a hydrogen fueling system or to record data-based events or operations of a system environment or a network environment or may refer to data collected and recorded through the process.

In a case of bidirectional communication, a station may include a sensor designated by a fueling protocol, and a station PLC or an electronic control unit may acquire a measured value from the sensor and deliver the measured value to the vehicle. The above-described vehicle or station may use a standard protocol for communication such as infrared communication, WiFi, or Bluetooth.

In addition, the vehicle and the dispenser may establish a physically connected communication channel at a vehicle-dispenser interface. A pairing process for establishing the communication channel may be performed by using a wired, optical, or wireless technology.

A discovery and pairing procedure of the first use case UC1 may have pre-conditions in which a nozzle of the dispenser is inserted into a receptacle of the vehicle, that is, a vehicle fueling receptacle, and is firmly connected thereto. The vehicle fueling receptacle may be simply referred to as a vehicle receptacle or a receptacle. The discovery and pairing procedure may be referred to as a dispenser discovery protocol (DDP) and may also be simply referred to as a pairing process.

The DDP may be initiated by a DDP request message (DDPRequest) broadcast by the mobility. The DDP request message may include a pairing ID (pairing_id) of the mobility. The dispenser may receive the DDP request message and may transmit a DDP response message to the mobility in response to the DDP request message. The DDP response message may include an IP address (IPAddr) of the dispenser, a TCP port number (TCPPort) of the dispenser, a UDP port number (UDPPort) of the dispenser, and a pairing ID (pairing_id) of the dispenser.

In addition, the vehicle and the dispenser basically know which communication protocol is to be followed. Therefore, communication following the use case UC1 may depend on a communication protocol agreed on in a current use case UC1 as post-conditions of the discovery and pairing procedure. In a case where a communication protocol deviating from an agreed range is selected by the vehicle or the dispenser, communication using the selected communication protocol may not be performed. That is, even when the pairing process is successfully completed, authorization for fueling or authorization for a fueling protocol may not yet be granted.

All methods used to pair the vehicle and the dispenser are configured not to increase an ignition or explosion risk above an acceptable level. For example, all wired pairing methods may be configured to mitigate or block a spark risk caused by electrostatic discharge.

In terms of validity of physical pairing, all methods used to pair the vehicle and the dispenser may be integrated into a vehicle-dispenser interface or may be installed to have proximity between a vehicle fueling receptacle of the vehicle and a nozzle and a hose assembly of the dispenser. Here, the interface may refer to a structure physically integrated into a nozzle and receptacle interface. The proximity may be defined by hardware related to a pairing method.

For example, a physical geometry structure used for infrared communication may be designated, including an allowed distance between a transmitter and a receiver. In addition, a physical shape of hydrogen fueling hardware may be designated in advance, and, in this case, the proximity may exclude a pairing method having a risk of pairing a vehicle and a dispenser that are not physically connected, for example, relatively long-range wireless communication technology such as Bluetooth. Infrared communication may be referred to as IrDA (infrared data association) communication and may include bidirectional infrared (bidirectional IrDA, bi-IrDA) communication.

Referring again to FIG. 5, a hydrogen fueling bidirectional communication method according to this exemplary embodiment may be a communication method for fueling performed by a communication device or a communication control device of hydrogen mobility, that is, a bidirectional communication method performed by hydrogen mobility with a dispenser, and may include: negotiating a communication protocol with the dispenser that supplies hydrogen as fuel to the hydrogen mobility in step S503, negotiating a fueling protocol for hydrogen fueling with the dispenser in step S504, and negotiating fueling parameters with the dispenser based on the negotiated fueling protocol in step S505.

In addition, a hydrogen fueling bidirectional communication method according to this exemplary embodiment may be a communication method for hydrogen fueling performed by the dispenser that supplies hydrogen as fuel to the hydrogen mobility, that is, a bidirectional communication method performed by the dispenser with the hydrogen mobility, and may include: negotiating a communication protocol with the hydrogen mobility in step S503, negotiating a fueling protocol for hydrogen fueling with the hydrogen mobility in step S504, and negotiating fueling parameters with the hydrogen mobility based on the negotiated fueling protocol in step S505.

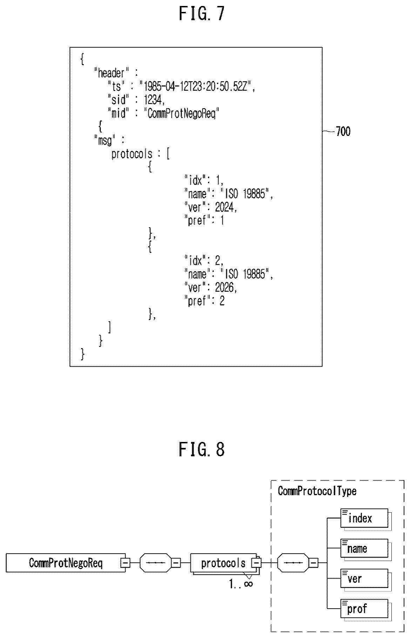

Each use case will be further specified by detailed descriptions referring to FIGS. 8 to 32 below.

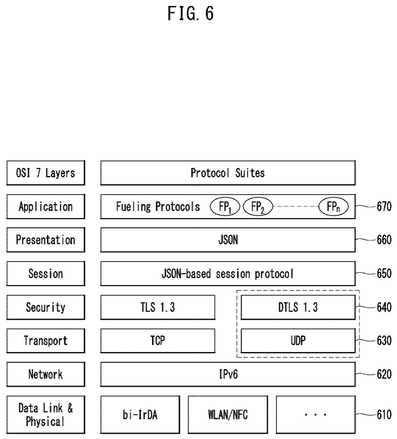

FIG. 6 is an exemplary diagram based on an OSI (open systems interconnection) seven-layer model with respect to a communication stack related to each use case of FIG. 5 to which a hydrogen fueling bidirectional communication method according to an exemplary embodiment of the present disclosure may be applied.

As shown in FIG. 6, a communication stack related to each use case of a communication method for hydrogen fueling may be expressed as protocol suites for a data link and physical layer belonging to the OSI seven layers, a network layer, a transport layer, a security layer, a session layer, a presentation layer, and an application layer. A communication stack for hydrogen fueling may be implemented by any one or a combination of hardware modules and software modules in a communication device or a communication control device or a computing device having means or a configuration performing a function similar thereto.

More specifically, in relation to the data link and physical layer, the communication stack may include at least one first protocol 610 selected from bidirectional IrDA (bi-IrDA), WLAN, NFC, etc. or at least one first component performing a function of the first protocol 610.

In addition, in relation to the network layer, the communication stack may include an IPv6 (internet protocol version 6) protocol 620. The IPv6 protocol may be referred to as a second protocol.

In addition, in relation to the transport layer, the communication stack may include at least one third protocol 630 selected from a TCP (transmission control protocol), a UDP (user datagram protocol), etc.

In addition, in relation to the security layer, the communication stack may include at least one fourth protocol 640 selected from TLS (transport layer security), DTLS (datagram transport layer security), etc. The TLS may include versions such as TLS 1.2 and TLS 1.3, and the DTLS may include versions such as DTLS 1.2 and DTLS 1.3. The TLS may be implemented on a TCP socket, and the DTLS may be implemented on a UDP socket.

In addition, in relation to the session layer, the communication stack may include a JSON (JavaScript object notation)-based session protocol 650. The JSON-based session protocol 650 may be used when data are transmitted and received between the vehicle and the dispenser or between an electronic control unit of the vehicle and an electronic control unit of the station.

In addition, in relation to the presentation layer, the communication stack may include JSON 660. The JSON is one of formats that may be used when data are transmitted from a server to a client. By using JSON, protocol messages may be represented in JSON between the vehicle and the dispenser or between the electronic control unit of the vehicle and the electronic control unit of the station/dispenser.

In addition, in relation to the application layer, the communication stack may include fueling protocols (FP) 670 for hydrogen fueling. The fueling protocols 670 may include a first fueling protocol FP1, a second fueling protocol FP2, and an nth fueling protocol FPn. The n may be any natural number of 3 or more.

In another exemplary embodiment, a communication stack for hydrogen fueling may be configured to use a PLC (programmable logic controller) and WLAN as protocols of the data link and physical layer and the network layer, use TCP and/or IPv6 as protocols of the transport layer and the security layer, use a binary XML (binary extensible markup language) protocol as a protocol of the session layer corresponding to an encoding layer, and utilize one of existing protocols used for an electric vehicle as protocols of the presentation layer and the application layer.

The existing protocols used for an electric vehicle may include protocols for performing procedures such as DC (direct current) charging, AC (alternate current) charging, wireless power transfer (WPT), and an automatic connection device pantograph (ACDP) charging.

Communication data items exchanged between the vehicle and the station through the above-described communication stack for hydrogen fueling are shown in Table 1 below.

**[Table 1]**

| Type | Station → Vehicle | Vehicle → Station |
|---|---|---|
| | - Supplied hydrogen pressure | - Receptacle type |
| | - Supplied hydrogen temperature | - Rated receptacle working pressure |
| Communication Data Items | - Supplied hydrogen flow rate | |
| | - Maximum allowable hydrogen supply pressure | - Tank volume |
| | | - Tank pressure |
| | - Maximum allowable hydrogen supply temperature | - Tank temperature |
| | | - Maximum operating pressure |
| | - Minimum allowable hydrogen supply temperature | - Maximum operating temperature |
| | | |
| | - Maximum allowable hydrogen supply flow rate | |
| | | |
| | - Ambient temperature | |
| | - Whether communication-based fueling is enabled | |
| | - Target value(s) | |
| | - Charging progress status | |
| | - Emergency stop status | |
| | - Hydrogen fueling protocol category | |
| | - Supplied hydrogen amount | |
| | - Estimated fueling completion time | |

FIG. 7 is an exemplary diagram illustrating a JSON (JavaScript object notation) message format that may be used in a presentation layer or a session layer among the communication stack for hydrogen fueling of FIG. 6. The JSON message format represents a message format of a text-based data exchange standard that is human-readable and used to easily exchange and store data. The JSON message format is easy to understand, supports schema verification and flexibility when necessary, and may be used in most web traffic. Accordingly, a communication method of this exemplary embodiment may be configured to use a JSON format.

For example, a communication device for hydrogen fueling may use a JSON message format 700, such as that illustrated in FIG. 7, in a protocol of the presentation layer or the session layer.

In the JSON message format 700, JSON data of each field are configured in a pair of a name and a value input with double quotation marks (""), that is, in a form of "key": "value", and a JSON object of a header portion or a message (msg) portion may be expressed in a form surrounded by a pair of braces ({}) and may be configured to include a plurality of properties by using commas (,) inside the braces.

The JSON message 700 may be used for a communication protocol negotiation request (CommProtNegoReq) message. A communication protocol negotiation request message includes a header portion and a message (msg) portion.

In a JSON-format message adopted in this exemplary embodiment, a header portion includes fields or properties respectively having names of a timestamp (ts), a session ID (sid), and a message ID (mid). The timestamp forms a pair with a value indicating when a message is sent in a coordinated universal time (UTC) or generalized time format. The session ID forms a pair with a value indicating a unique session identifier assigned by the dispenser. The message ID forms a pair with a value indicating a message identifier for a specific message such as a communication protocol negotiation request (CommProtNegoReq).

In addition, the message (msg) portion may include a JSON object that is an application message in a JSON format. The JSON object may include a field having a data name of protocols. The protocol field may include a plurality of protocols including properties of an index (idx), a name (name), a version (ver), and a preference (pref), respectively, in an array form within brackets ([]).

Hereinafter, operation principles of respective use cases for hydrogen fueling to be processed by each protocol of the communication stack of FIG. 5 will be described in more detail with reference to FIGS. 8 to 32.

First, a first use case UC1 of a discovery and pairing stage (see step S501 of FIG. 5) is configured to identify a communication counterpart (a communication module of the vehicle or the dispenser) responsible for controlling a physically connected receptacle and nozzle by the vehicle or the dispenser/station. The UC1 may also define a method for identifying incompatibility of the communication counterpart and define a safety device mechanism.

In the first use case UC1, the vehicle and the dispenser may attempt to find a common communication technology to execute a hydrogen fueling protocol. The vehicle and the dispenser may search for each other and initiate communication according to a discovery mechanism provided by the data link and physical layer. An additional pairing procedure is required in order for a device connected to a hose assembly for hydrogen fueling and a communication channel to be set. For example, in a case of wireless communication, a separate pairing channel for delivering pairing information may be required. When pairing is implicitly guaranteed, for example, when only a communication channel of a communication controller integrated with a hose assembly satisfies a pairing procedure, the pairing procedure may be satisfied.

Table 2 illustrates objectives, a short description, pre-conditions, and post-conditions of the use case UC1 of the discovery and pairing stage.

**[Table 2]**

| Type | Description |
|---|---|
| Use Case Name | UC1: "Discovery and Pairing" |
| Purpose | Through UC1, each device can identify the communication peer (i.e., the communication module of the vehicle or the dispenser) responsible for controlling the physically connected receptacle or nozzle. UC1 also defines a method for identifying incompatibility and establishing a safety mechanism. |
| Overview | In this use case, the vehicle and the dispenser attempt to determine a common communication technology to execute the fueling protocol. Based on the discovery mechanism provided by the physical/data link layer, the vehicle and the dispenser discover each other and initiate communication. Additional pairing procedures may be required to confirm that the communication channel is established with the component connected to the fueling hose assembly. If the communication channel alone cannot ensure valid pairing (e.g., wireless communication), an additional pairing channel may be required to exchange pairing information. When pairing is implicitly guaranteed (e.g., communication integrated with the fueling hose assembly), the communication channel alone may be sufficient. |
| Pre-conditions | The dispenser nozzle is firmly connected to the vehicle receptacle. |
| Post-conditions | The vehicle and the dispenser determine which communication medium is to be used for further communication. All communication after completion of this use case shall rely only on the communication protocol agreed upon in this use case. If a communication protocol outside the agreed scope is selected afterward, communication shall no longer be performed. |

Table 3 illustrates supported communication technologies, a communication channel, and a pairing channel that may be used in the first use case UC1 of the discovery and pairing stage.

**[Table 3]**

| Type | Communication Technology | Communication Channel | Pairing Channel |
|---|---|---|---|
| A P.2 | Bidirectional IrDA | (irDA references) | N/A |
| A P.3 | WLAN with NFC | IEEE 802.11 | NFC Forum Specifications |

In the above-described discovery and pairing stage, mobility such as a vehicle may broadcast a message including a pairing ID (PAIR_ID) of the mobility, that is, a vehicle ID (vehicle_id). The dispenser may deliver to the vehicle a message replying that the dispenser has received the vehicle ID from the vehicle. The vehicle may deliver to the dispenser a message indicating that the vehicle has normally received an ACK message indicating that the dispenser has received the vehicle ID. Next, the dispenser may broadcast a message including a pairing ID of the dispenser, that is, a dispenser ID (dispenser_id). The vehicle may deliver to the dispenser a message replying that the vehicle has received the dispenser ID from the dispenser. The dispenser may deliver to the vehicle a message indicating that the dispenser has normally received an ACK message indicating that the vehicle has received the dispenser ID.

Through such a transmit-echo-verification method, the vehicle and the dispenser may use a session-specific randomized pairing ID. According to the transmit-echo-verification method, a privacy problem regarding pairing ID exchange may be solved. That is, reliability for a pairing process affects subsequent processes, and, for this purpose, a session-specific pairing ID may be included in data used to establish reliability.

In addition, a communication device for hydrogen fueling may be configured as a device having backward compatibility or a device having interoperability. When devices are classified based on interoperability, a communication device for hydrogen fueling may be classified into Type 0, Type 1, Type 2, and Type 3.

A Type 0 device may refer to a device that does not support communication for fueling or does not receive a corresponding communication message. A Type 1 device may refer to a device that supports IrDA communication for fueling. The Type 1 device may fall back to a Type 0 device. A Type 2 device may refer to a device that supports advanced communication (AC). The Type 2 device may fall back to a Type 0 device. A Type 3 device may refer to a device that supports both IrDA and advanced communication. The Type 3 device may fall back to any one of a Type 0 device, a Type 1 device, and a Type 2 device.

Here, IrDA (infrared data association) communication may refer to a communication method based on a physical communication protocol used for data exchange in a relatively short range such as a PAN (personal area network), which is wireless communication using infrared rays popularized by an international infrared data communication association.

Advanced communication may refer to a communication method using a specific protocol and a medium such as WLAN (wireless local area network), Bluetooth (BT), NFC (near field communication), WiFi, UWB (ultra-wideband), RFID (radio frequency identification), fourth generation (4G), or fifth generation (5G) communication. The specific protocol may include a TCP/IP (transmission control protocol/internet protocol) and a fueling protocol.

In addition, advanced communication may include bidirectional IrDA, serial communication, in-vehicle Ethernet (ETH), and high level communication. High level communication may process all information exceeding an amount of information handled in command and control communication. A data link of high level communication may use PLC (power line communication), but is not limited thereto.

In addition, advanced communication may, in a hybrid form, include a form in which IrDA and a wired communication are combined or a form in which IrDA and a wireless communication are combined. A form in which IrDA and a wired communication are combined may include a form in which an IrDA communication means and a wired channel means are combined in a nozzle and a receptacle.

As described above, advanced communication may support wired/wireless bidirectional communication technologies. For wireless communication, a communication means supporting one or more of 5G, WLAN, BLE, ETH, UWB, RFID, or NFC may be included. A known protocol such as TCP/IP may be used as a protocol for the communication means. In addition, advanced communication may support wireless communication technologies such as inductive communication, Wi-Fi for an ACD (autoconnect charging device), and UWB for the ACD.

In practice, a communication device for hydrogen fueling may be implemented so as to support a communication technology different from a communication technology supported by a counterpart communication device. Accordingly, a communication device for hydrogen fueling of this exemplary embodiment may be configured to maximize interoperability between devices.

That is, the discovery and pairing stage may be performed based on interoperability or compatibility information shared between the mobility and the dispenser. In particular, a communication protocol negotiation, a fueling protocol negotiation, and a fueling parameter negotiation described later and a decision process thereof may be performed within a range of interoperability or compatibility. Interoperability or compatibility information is identified and shared in the discovery and pairing stage and may be identified again and shared in an updated state in a subsequent process according to a current situation.

For example, when a Type 1 device supporting a specification #1 according to a predetermined standard meets a Type 0 device or a Type 2 device, the Type 1 device may fall back to the Type 0 device. When a Type 2 device supporting a specification #2 according to a predetermined standard meets a Type 0 device or a Type 1 device, the Type 2 device may fall back to the Type 0 device. When a Type 3 device supporting the specification #2 meets a Type 0 device, the Type 3 device may fall back to the Type 0 device. When the Type 3 device meets a Type 1 device, the Type 3 device may fall back to the Type 1 device. When the Type 3 device meets a Type 2 device, the Type 3 device may fall back to the Type 2 device. The above-described specification #1 may include an SAE (Society of Automotive Engineers) standard. The specification #2 may include an ISO 19885-3 standard.

In addition, to support interoperability, a communication device for hydrogen fueling may perform a connection compatibility check. For example, hydrogen mobility or a station may perform a connection compatibility check as in any one of scenarios 1 to 3 below according to whether WLAN, which is one of advanced communications, is supported.

In scenario 1, the dispenser may include or use an access point (AP) that is a wireless router. The dispenser may support fuel station beaconing and a fueling method in VSE (vehicle supply equipment). A vehicle close to the dispenser may scan and find the dispenser and may establish a WLAN link with the found dispenser.

In scenario 2, the dispenser may not support WLAN communication but may support IrDA communication. For example, when the dispenser is a Type 1 device, a vehicle that is a Type 3 device close to the dispenser cannot find the dispenser that is the Type 1 device through a scanning operation. Meanwhile, when a receptacle of the vehicle is connected to a nozzle attached to a cable of the dispenser, IrDA communication may be started between the vehicle and the dispenser.

In scenario 3, the dispenser may support WLAN communication and IrDA communication. In this case, the dispenser becomes a Type 3 device. A vehicle that is a Type 1 device may be parked around the dispenser. The dispenser cannot yet find any WLAN client. However, when a receptacle of the vehicle is connected to a nozzle attached to a cable of the dispenser, IrDA communication may be started between the vehicle and the dispenser.

In addition, in the above-described discovery and pairing stage, a communication controller of hydrogen mobility or a communication controller of a station may, when pairing is performed at a UCDC level 2 (UCDC-2) and a UCDC level 3 (UCDC-3), exchange pairing IDs and check pairing IDs of counterparts. That is, the vehicle and the dispenser may have pairing identities (ID), and requirements for exchanging the identities may be classified by a UCDC (use classification of data communicated) level. The UCDC level may have a UCDC level 1 (UCDC-1), a UCDC level 2 (UCDC-2), and a UCDC level 3 (UCDC-3). The UCDC level may further have a UCDC level 0 (UCDC-0).

The above-described UCDC is a concept to be considered when a standard related to hydrogen fueling is designed or developed and requires a reference to communication, active control, and safety functions. That is, the UCDC may represent a numeric ranking of data transferred between the vehicle and a dispensing system based on use of a fueling protocol supported by risk assessment and may be defined as four levels of level 0 to level 3.

The UCDC level 0 indicates a case where data are not transferred, for example, no communication or non-communication. The UCDC level 0 900 may refer to communication in which data are not transferred or data are transferred but are not used by a fueling protocol for dispensing of hydrogen or a related safety function. In the UCDC level 0, since communication between the vehicle and the dispenser is not supported, the dispenser cannot deliver a pairing ID to the vehicle in a process control or safety functions process.

The UCDC level 1 indicates that data transferred at the UCDC level 1 are not used for a safety function but may be used for data collection and may also be used to improve performance of basic process control for a fueling protocol when a measure for mitigating a risk (or a risk when present) due to a fault is provided. The UCDC level 1 does not support bidirectional communication and may not enable security of a communication channel.

When pairing is performed at the UCDC level 1, the vehicle may deliver a pairing ID to the dispenser. Data transferred at the UCDC level 1 are not used for safety functions but transferred static data may be used to improve performance of a fueling protocol, and transferred dynamic data may be used to reduce a risk against process deviations in the fueling protocol.

The UCDC level 2 indicates that static data transferred at the UCDC level 2 may be used for safety functions in addition to an allowed use for static data and dynamic data defined at the UCDC level 1. The static data at the UCDC level 2 may be added in addition to an allowed use for the static data and the dynamic data defined for the UCDC level 1.

The UCDC level 3 indicates that static data and dynamic data may be used for dynamic control in a protocol or a safety function. The dynamic data at the UCDC level 3 may be added in addition to an allowed use for the static data and the dynamic data defined for the UCDC level 2.

Pairing the vehicle and the dispenser at the UCDC level 2 and the UCDC level 3 indicates that, in order to satisfy a specific security level, for example, an IEC 62443 security level 3, sufficient information for protecting the communication may be provided. The IEC 62443 security level 3 may be a security level for actors having appropriate resources and appropriate motivations.

As described above, the UCDC level may have a form in which the UCDC level 1 is included in the UCDC level 2 and the UCDC level 2 is included in the UCDC level 3, that is, a higher level includes a lower level. A device supporting a specific UCDC level may support a device at a lower UCDC level. Devices supporting different UCDC levels may use a highest UCDC level supported by both devices. The above-described UCDC levels may be understood to easily support the UCDC level 0. The UCDC level may be understood to be backward compatible. In a modification of this exemplary embodiment, backward compatibility may be validly applied to each of and a combination of Non-Comm, Uni-directional Comm., and Bi-directional Comm. regardless of the UCDC level.

Meanwhile, when secure communication is supported at a specific UCDC level, one or more of the vehicle or the dispenser may check whether pairing provides sufficient information to protect communication for all methods used to pair the vehicle and the dispenser. For example, pairing may include exchange of encryption keys so that the vehicle and the dispenser may perform communication security (see step S502 of FIG. 5) during fueling.

Next, a certification process of a communication security procedure that may be adopted in a communication device for hydrogen fueling according to this exemplary embodiment will be described in more detail as follows.

Hydrogen mobility may deliver to the dispenser a request message requesting a list of authorization methods of the dispenser. The dispenser may deliver to the mobility (hereinafter, also simply referred to as "mobility") a response message to the request for an authorization method list of the mobility. The response message may include authorization method list information related to an external authorization procedure such as RFID (radio frequency identification), credit cards, or debit cards, or an internal authorization procedure.

Next, the mobility may deliver to the dispenser an authorization request message including a specific method selected from the authorization method list, for example, RFID. The dispenser may deliver to the mobility a response message to the authorization request of the mobility. The response message may include information indicating that an authorization method selected by the mobility is working.

Next, the mobility may perform authorization using the authorization method selected earlier according to the response of the dispenser and may deliver to the dispenser a confirmation request message for the performed authorization. When authorization is completed, the dispenser may transmit to the mobility a Done (success) message for authorization completion. When authorization completion is not confirmed or authorization completion is not performed, the above-described series of stages may be repeatedly performed.

According to the above-described configuration, before further proceeding with a hydrogen fueling process, the dispenser may check whether the mobility is authorized, that is, whether a user of the mobility has a right for hydrogen fueling.

For security of the certification process, a hydrogen fueling device may establish a TCP connection through a protocol of a transport layer after a data link and physical layer connection is established between the mobility and the dispenser, perform a TLS handshake to process certification, and exchange keys to establish a secure communication channel. In addition, UDP communication protected by DTLS may be used while security-critical information is exchanged.

In addition, the mobility and the dispenser may successfully perform a discovery and pairing procedure and may establish a connection of the data link and physical layer. Then, the mobility and the dispenser may prepare credentials required for certification and key exchange. Accordingly, a communication channel between the mobility and the dispenser may be encrypted and integrity-protected. In this case, the dispenser may certify the mobility or, optionally, the mobility may certify the dispenser.

Meanwhile, in the above-described TLS handshake, mobility certification may be mandatory and dispenser certification may be optional, and, in this case, the dispenser may be configured to serve as a client and the mobility may be configured to serve as a server.

In a TLS handshake, the mobility and the dispenser need to prepare required credentials. The mobility and the dispenser may store in a secure storage protected from unauthorized access a certificate chain, a private key corresponding to a certificate, and a trust anchor certificate.

During the TLS handshake, the mobility may transmit to the dispenser a predefined CertificateRequest message requesting client certification. When the CertificateRequest message is received, the dispenser may operate to transmit to the mobility a certificate and a Certificate Verify message together with the certificate.

When the mobility transmits to the dispenser the CertificateRequest message together with a handshake message such as a ServerHello and the dispenser does not transmit a Certificate Verify message together with the certificate, the mobility may transmit an alert message including a certificate _required alert code and may stop the TLS handshake.

According to the above-described exemplary embodiment, objectives, a short description, pre-conditions, and post-conditions of a second use case (UC2) of a communication security stage may be defined as shown in Table 4 below.

**[Table 4]**

| Type | Description |
|---|---|
| Use Case Name | UC2: "Communication Security" |
| Purpose | The vehicle and the dispenser establish a secure communication channel over the previously discovered communication link in order to achieve communication security goals including confidentiality, integrity, and privacy protection. |
| Overview | After a physical and data-link layer connection between the vehicle and the dispenser is established, the communication proceeds to Layer 3 setup, followed by the establishment of a TCP connection. A TLS handshake is performed to authenticate the peers and exchange cryptographic keys, thereby establishing a secure communication channel. |
| Pre-conditions | The vehicle and the dispenser shall have successfully completed the Discovery and Pairing use case and established a data-link layer connection. Credentials required for authentication and key exchange shall be prepared and available. |
| Post-conditions | The dispenser has authenticated the vehicle, and the vehicle has successfully authenticated the dispenser. The communication channel between the vehicle and the dispenser is encrypted, and the integrity of exchanged data is protected. |

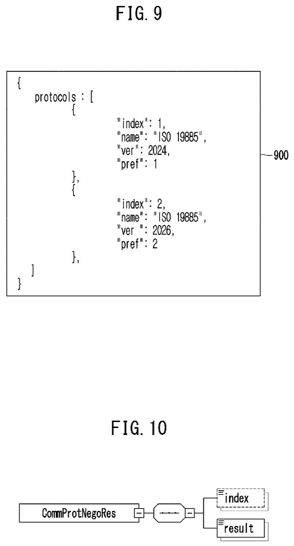

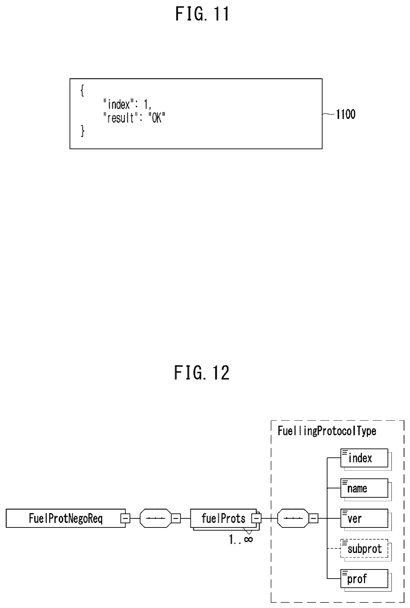

FIG. 8 is an exemplary diagram for describing a communication protocol negotiation request message that may be applied to a communication protocol negotiation procedure and a functional block thereof among a framework of functional blocks (hereinafter, also simply referred to as a "fueling framework") of a hydrogen fueling procedure of FIG. 5. FIG. 9 is an exemplary diagram illustrating a JSON message format of the communication protocol negotiation request message of FIG. 8. FIG. 10 is an exemplary diagram for describing a communication protocol negotiation response message that may be applied to the communication protocol negotiation procedure and the functional block thereof of the fueling framework of FIG. 5. FIG. 11 is an exemplary diagram illustrating a JSON message format of the communication protocol negotiation request message of FIG. 10. In a communication protocol negotiation procedure, which is one of hydrogen fueling procedures according to this exemplary embodiment, mobility such as a hydrogen vehicle and a dispenser of a station may negotiate and determine a communication protocol to be used for bidirectional communication throughout fueling.

To this end, the mobility may include: transmitting, to the dispenser, a message including information regarding a first communication protocol available in the mobility; and receiving, from the dispenser, a message including information regarding a second communication protocol selected from among common communication protocols that are commonly available between the mobility and the dispenser based on the information regarding the first communication protocol.

In addition, in a hydrogen fueling bidirectional communication method, the dispenser may be configured to receive, from the mobility, a message including information regarding the first communication protocol applicable in the mobility, select the second communication protocol from among communication protocols commonly applicable in the mobility and the dispenser based on the information regarding the first communication protocol, and transmit, to the mobility, a message including information regarding the selected second communication protocol. Here, the hydrogen fueling bidirectional communication method may be configured to further include a step in which the dispenser requests in advance, from the mobility, information including a list of the first communication protocols applicable to the mobility.

Meanwhile, in the hydrogen fueling bidirectional communication method, the dispenser may be configured to first transmit, to the mobility, a message including information regarding communication protocols applicable to hydrogen fueling, and, when the mobility selects a specific second communication protocol from among communication protocols that may be commonly used with the dispenser, receive, from the mobility, a message including information regarding the selected second communication protocol. In this case, the hydrogen fueling bidirectional communication method may be configured to further include a step in which the mobility requests in advance, from the dispenser, information including a list of communication protocols applicable in the dispenser.

According to this exemplary embodiment, objectives, a short description, pre-conditions, and post-conditions of a third use case ("UC-3" or "UC3") of a communication protocol negotiation procedure may be defined as shown in Table 5 below.

**[Table 5]**

| Type | Description |
|---|---|
| Use Case Name | UC3: "Communication Protocol Negotiation" |
| Purpose | The vehicle and the dispenser determine the communication protocol to be used throughout the fueling process. |
| Overview | After the TLS handshake is successfully completed, the vehicle and the dispenser negotiate the communication protocol to be used throughout the fueling session. The negotiation begins when the vehicle provides a list of supported protocols. The dispenser selects a protocol commonly supported by both peers, and the vehicle selects the most preferred protocol among the allowed options to finalize the negotiation. |
| Pre-conditions | A secure authenticated communication channel has been established using TLS 1.3. |
| Post-conditions | The vehicle and the dispenser have successfully agreed on the communication protocol to be used for hydrogen fueling communication. |

According to this exemplary embodiment, contents of messages transmitted or received between the mobility and the dispenser in the communication protocol negotiation stage may be defined as shown in Table 6 below.

**[Table 6]**

| Element Name | Type | Semantics |
|---|---|---|
| protocols | CommProtocolType | List of communication protocols supported by the vehicle. |

| CommProtocolType | | |
|---|---|---|
| Index | Unsigned integer | Index of common protocol |
| Name | String | Name of common protocol |
| Ver | String | Verson of common protocol |
| pref | Unsigned integer | Preference value of the protocol, where a lower value indicates a higher preference |

That is, as shown in FIG. 8, information regarding a vehicle-supported communication protocol (communication protocol supported by the vehicle) corresponding to the first communication protocol may include information regarding a common protocol type (CommProtocolType). The common protocol type may include an index of a common protocol, a name of the common protocol, a version (ver) of the common protocol, and a preference (pref) for the common protocol. An example of the above-described communication protocol negotiation request message in a JSON format is illustrated in FIG. 9. As shown in FIG. 9, information regarding the first communication protocol (protocols) delivered through a communication protocol negotiation request message 900 may include information regarding a first protocol and a second protocol. The first protocol, as one common protocol type (CommProtocolType), may have an index 1, a name ISO 19885, a version 2024, and a preference 1. The second protocol, as another common protocol type, may have an index 2, a name ISO 19885, a version 2026, and a preference 2. Of course, the first communication protocol may include three or more protocols.

According to this exemplary embodiment, contents of a communication protocol negotiation response (CommProtNegoRes) message that is transmitted or received between the mobility and the dispenser in the communication protocol negotiation stage may be defined as illustrated in Table 7 below.

**[Table 7]**

| Element Name | Type | Semantics / Description |
|---|---|---|
| Index | Unsigned integer | Optional: Index of the selected protocol |
| Result | resultType | Result of the protocol negotiation. |
| | | When negotiation succeeds, the value shall be "OK". |
| | | When negotiation fails, the value shall be "FAILED _INCOMPAT". |

That is, as shown in FIG. 10, a communication protocol negotiation response (CommProtNegoRes) message including a result of a communication protocol negotiation may include an optional field of an index and may include information regarding a result of the protocol negotiation. In addition, as shown in FIG. 11, in a communication protocol negotiation response message 1100 in a JSON format, an index of the communication protocol negotiation response message may be set to a predetermined value, for example, "1". A result field of the communication protocol negotiation response message may have a value "OK" when negotiation is successful and may have a value "FAILED _INCOMPAT" when negotiation is not successful.

The above-described communication protocol negotiation procedure may be configured so that the mobility and the dispenser discover and pair with each other through the first use case UC1 on a compatible communication channel, perform a communication security procedure through the second use case UC2 when necessary (see step S502 of FIG. 5), and then identify a communication protocol to comply with during a fueling session of hydrogen fueling.

In this exemplary embodiment, a communication protocol negotiation procedure for bidirectional communication between the dispenser and the mobility may be configured to be performed by a communication controller of the mobility using the first communication protocol after discovery and pairing with a communication controller of the dispenser or after a communication security procedure, and the reverse may also be applied.

Meanwhile, when a result of the communication protocol negotiation stage is related to a specific communication protocol, a fueling protocol negotiation stage and a fueling parameter negotiation stage described later may be performed by using the specific communication protocol. In addition, the communication protocol negotiation stage may be in a state in which information regarding interoperability and/or compatibility between the mobility and the dispenser in the previous discovery and pairing process has already been shared.

Information regarding interoperability or compatibility between the mobility and the dispenser is basically shared in the discovery and pairing process. However, because of a change in a communication environment or a change in an environmental variable related to hydrogen fueling in a process of performing a hydrogen fueling procedure, the information may be updated in the communication protocol negotiation process.

The communication protocol negotiation procedure may be implemented by all available communication protocols to ensure successful negotiation between different fueling protocols for each communication technology. For example, a fueling protocol using a communication technology such as WLAN may use a protocol (hereinafter also referred to as a "common protocol") commonly supported by the mobility and the dispenser in order to determine a communication protocol to be used in a hydrogen fueling bidirectional communication process.

Meanwhile, the mobility or the dispenser may be configured to further perform a fallback process to a lower type or a lower UCDC level of a counterpart according to a type or a UCDC level identified in the communication protocol negotiation procedure.

The dispenser may deliver to the mobility a response message including a specific protocol (<selected protocol>) field selected from a protocol list. The specific protocol field, as a common protocol selected by the dispenser, may include information regarding a protocol supported by both the dispenser and the mobility and having a highest priority preferred by the mobility. According to the common protocol, the mobility and the dispenser may reach an agreement regarding a communication protocol to use for fueling communication.

As described above, the mobility may give priorities to communication protocols supported by the mobility. The mobility may provide the dispenser with the communication protocols to which the priorities are given. An example of the communication protocols having priorities (priority) assigned thereto may be shown in Table 8 below.

**[Table 8]**

| Protocol ID | Priority |
|---|---|
| SAE J2601 - No comm. | 7 |
| SAE J2799 - IrDA | 6 |
| SAE J2601 - IrDA | 5 |
| ISO 19885-3-2023-UCDC-0 | 4 |
| ISO 19885-3-2023-UCDC-1 | 3 |
| ISO 19885-3-2023-UCDC-2 | 2 |
| ISO 19885-3-2023-UCDC-3 | 1 |

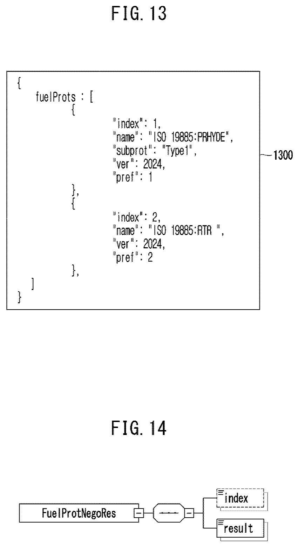

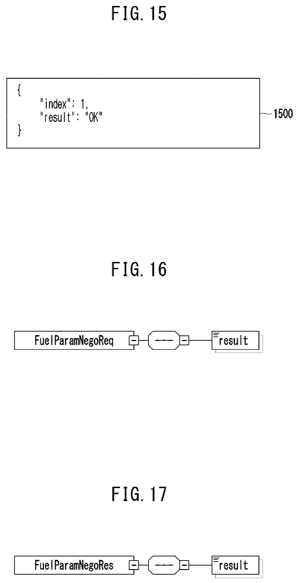

FIG. 12 is an exemplary diagram illustrating a fueling protocol negotiation request message, which can be applied to the fueling protocol negotiation procedure and the functional blocks of the fueling framework of FIG. 5. FIG. 13 is an exemplary diagram illustrating a JSON message format of the fueling protocol negotiation request message of FIG. 12. FIG. 14 is an exemplary diagram illustrating a fueling protocol negotiation response message, which can be applied to the fueling protocol negotiation procedure and the functional blocks of the fueling framework of FIG. 5. FIG. 15 is an exemplary diagram illustrating a JSON message format of the fueling protocol negotiation response message of FIG. 14. Referring to FIGS. 12 to 15, the fueling protocol negotiation procedure of the present embodiment may include a step in which the mobility transmits to the dispenser a message including information on a first fueling protocol (fueling protocols, fuelProts) applicable to the mobility based on the result of the communication protocol negotiation, i.e., a fueling protocol negotiation request (FuelProtNegoReq) message; and a step in which the mobility receives from the dispenser a message including information on a second fueling protocol selected from among fueling protocols commonly applicable between the mobility and the dispenser, i.e., a fueling protocol negotiation response (FuelProtNegoRes) message.

When a specific communication protocol is selected as a result of the communication protocol negotiation, a request message including information on at least one first fueling protocol applicable to the mobility and supported by the selected communication protocol may be transmitted to the dispenser.

In this case, the dispenser may identify, as fueling protocols supported by the selected communication protocol, those fueling protocols applicable to the dispenser that are in common with the above-described first fueling protocol, and may transmit to the mobility the selected common fueling protocol (hereinafter referred to as the second fueling protocol). The second fueling protocol may be selected based on interoperability and/or compatibility, or may be selected by applying a preference set by the mobility or the dispenser.

In another aspect, the dispenser may receive from the mobility a message including information on the first fueling protocol applicable to the mobility, may select, from among the first fueling protocol and the fueling protocols applicable to the dispenser, a common fueling protocol (the second fueling protocol) commonly applicable between the mobility and the dispenser, and may transmit to the mobility a message including information on the selected second fueling protocol. In this case, the dispenser may be configured to request in advance from the mobility information including a list of the first fueling protocols applicable to the mobility.

In still another aspect, when the dispenser first transmits to the mobility a message including information on the fueling protocols applicable to the dispenser, the mobility may select a specific fueling protocol from among the fueling protocols commonly applicable between the mobility and the dispenser, and may transmit to the dispenser a message including information on the selected specific fueling protocol. In this case, the mobility may be configured to request in advance from the dispenser information including a list of the fueling protocols applicable to the dispenser.

According to the present embodiment, the objectives, short description, pre-conditions, and post-conditions of the fourth use case (UC4) for the fueling protocol negotiation procedure may be defined as shown in Table 9.

**[Table 9]**

| Type | Description |
|---|---|
| Use Case Name | UC4: "Fueling Protocol Negotiation" |
| Purpose | The vehicle and the dispenser determine the fueling protocol to be used for hydrogen fueling. |
| Overview | After the communication protocol selection is completed, the vehicle and the dispenser negotiate the fueling protocol to be used for the fueling process. The negotiation begins when the vehicle provides a list of supported fueling protocols. The dispenser selects a protocol commonly supported by both peers, and the vehicle selects the most preferred protocol among the allowable options to finalize the negotiation. |
| Pre-conditions | The communication protocol has been selected. |
| Post-conditions | The vehicle and the dispenser have reached agreement on the fueling protocol to be used for hydrogen fueling. |

According to the present embodiment, contents of messages transmitted or received between the hydrogen mobility and the dispenser in the fueling protocol negotiation stage may be defined as shown in Table 10 below.

**[Table 10]**

| Element Name | Type | Semantics |
|---|---|---|
| fuelProts | fuelingProtocolType | Fueling protocols supported by the vehicle |

| fuelingProtocolType | | |
|---|---|---|
| idx | Unsigned integer | Index of the Fueling protocol |
| Name | String | Name of the Fueling protocol |
| Ver | String | Version of the Fueling protocol |
| subprot | String | Optional: Name of a sub-protocol |
| pref | Unsigned integer | Preference value for prioritizing protocols. A lower numeric value indicates a higher preference. |

According to this embodiment, information on the fueling protocol included in a fueling protocol negotiation request (FuelProtNegoReq) message may include, as shown in FIG. 12, an index (idx) of the fueling protocol, a name of the fueling protocol, a version (ver) of the fueling protocol, a sub-protocol (subprot) of the fueling protocol, and a preference (pref) for the fueling protocol. A lower number in the preference may represent a higher preference. When the fueling protocol negotiation request message is represented in a JSON format, fueling protocols (fuelProts) of the fueling protocol negotiation request message 1300 may include information on a plurality of protocols wrapped in curly brackets, as shown in FIG. 13. Among the plurality of protocols, a first protocol, as one fueling protocol type (fuelingProtocolType), may have an index of 1, a name of ISO 19885:PRHYDE, a sub-protocol of a first type (Type1), a version of 2024, and a preference of 1. And a second protocol, as another fueling protocol type, may have an index of 2, a name of ISO 19885:RTR, a version of 2024, and a preference of 2. Of course, the fueling protocols may include three or more protocols.

In addition, contents of a fueling protocol negotiation response (FuelProtNegoRes) message transmitted or received between the hydrogen mobility and the dispenser may be defined by Table 11 below.

**[Table 11]**

| Element Name | Type | Semantics / Description |
|---|---|---|
| Index | Unsigned integer | Optional: Index of the selected fueling protocol |
| Result | Enumeration | Result of the fueling protocol negotiation. |
| | | When the negotiation succeeds, the value shall be "OK". |
| | | When the negotiation fails, the value shall be "FAILED_INCOMPAT" |

As shown in FIG. 14, a fueling protocol negotiation response (FuelProtNegoRes) message may include an index, which is an optional field, and information on success or failure as a result of the fueling protocol negotiation (result). In addition, as shown in FIG. 15, the fueling protocol negotiation response message 1500, when represented in a JSON format, may be configured to include fields in which an index is represented as 1 and a result is represented as "OK," respectively.

Contents of messages transmitted in the fueling protocol negotiation process according to this embodiment may be defined as in Table 12 below.

**[Table 12]**

| Index | Name | Revision | Sub-Protocol | Preference |
|---|---|---|---|---|
| 1 | PRHYDE | 2023 | TYPE3-T-initial | 4 |
| 2 | PRHYDE | 2024 | TYPE3-T-Special | 3 |
| 3 | RTR-HFP | - | - | 2 |
| 4 | ANN-MPC | - | - | 5 |
| 5 | HMC-FAST | 1.0 | - | 1 |

As shown in Table 12, the mobility may provide the dispenser with parameter information in a table form, which includes information on an arbitrarily assigned name for a supported fueling method or fueling protocol, information on a revision year or a version, information on whether a sub-protocol is provided, and information on a priority or preference. In Table 12, PRHYDE (PRotocol for heavy-duty HYDrogEn refueling) is one proposed in one of European projects that have developed a heavy-duty vehicle fueling protocol, RTR-HFP is one proposed in a type of protocol concept for improving fueling efficiency based on real-time communication, and ANN-MPC may be one proposed in a type of protocol concept that collects and analyzes data from a fueling site and applies prediction to an actual fueling situation.

Meanwhile, in a modified example of this embodiment, the dispenser may actively exchange its own fueling protocol with the mobility on behalf of the mobility, and may provide the mobility with fueling protocols supported by the dispenser with priorities assigned thereto.

Messages that may be transmitted by the dispenser to the mobility in the fueling protocol negotiation step are illustrated in Table 13 and Table 14 below.

**[Table 13]**

| fueling Protocol ID | ResultCode |
|---|---|
| 2 | OK |

According to Table 13, the dispenser may select a fueling protocol identifier corresponding to index 2 and may deliver to the mobility a response message including a result code of OK.

**[Table 14]**

| fueling Protocol ID | ResultCode |
|---|---|
| | FAIL_NO_COMMON_PROTOCOL |

In addition, according to Table 14, when the dispenser fails to find a compatible protocol in the list of fueling protocols supported by the mobility and received from the mobility (fail), the dispenser may deliver to the mobility a response message that contains, in the ResultCode field, information indicating that no common protocol exists, for example, "FAIL_NO_COMMON_PROTOCOL" or "FAIL_INCOMPAT". According to the examples of Table 13 and Table 14, this may be similarly applied even in the case where, in the fueling protocol negotiation stage, the dispenser selects the second fueling protocol from among the common fueling protocols and responds to the mobility.

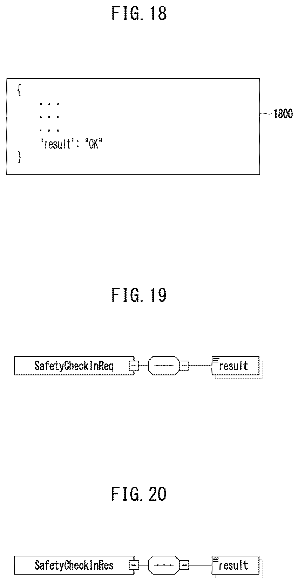

FIG. 16 is an exemplary diagram for explaining a fueling parameter negotiation request message that can be applied to the fueling parameter negotiation procedure and its functional block in the fueling framework of FIG. 5. FIG. 17 is an exemplary diagram for explaining a fueling parameter negotiation response message that can be applied to the fueling parameter negotiation procedure and its functional block in the fueling framework of FIG. 5. FIG. 18 is an exemplary diagram illustrating a JSON message format of the fueling parameter negotiation request message of FIG. 16 or the fueling parameter negotiation response message of FIG. 17.

Referring to FIGS. 16 to 18, the fueling parameter negotiation procedure may include a process in which the mobility and the dispenser exchange with each other detailed parameters required to implement a fueling protocol. The fueling parameter negotiation procedure may be referred to as a fueling parameter exchange procedure.

The fueling parameter negotiation procedure may include a step in which the mobility transmits to the dispenser a message, for example, a fueling parameter negotiation request (FuelParamNegoReq) message, that includes information on the fueling parameters on the mobility side required for a specific fueling protocol selected as a result of the fueling protocol negotiation, and a step in which the mobility receives from the dispenser a message, for example, a fueling parameter negotiation response (FuelParmNegoRes) message, that includes compatibility information on the dispenser side with respect to the fueling parameters on the mobility side.

In another aspect, the fueling parameter negotiation procedure may include a step in which the mobility receives from the dispenser a message that includes information on the fueling parameters on the dispenser side required for the specific fueling protocol selected as a result of the fueling protocol negotiation, and a step in which the mobility transmits to the dispenser a message that includes compatibility information on the mobility side with respect to the fueling parameters on the dispenser side.

The mobility or the dispenser may receive a message that includes information on the fueling parameters provided by the counterpart during the fueling parameter negotiation process, and, when accepting the parameters of such message, may set an "Accepted" field, or a parameter of this field, to "OK" or "TRUE".

In addition, when the mobility or the dispenser intends to exchange more parameters to reach an agreement on the fueling parameters, it may transmit to the counterpart the relevant message with the "Accepted" parameter set to "pending".

Also, when the mobility or the dispenser cannot accept the parameters provided by the counterpart in the last message, it may set the "Accepted" parameter to "FAIL" or "FALSE". When the dispenser sends "FALSE" for the acceptance setting (Accepted set), the mobility may terminate communication or may return to the fourth use case (UC4) for the fueling protocol negotiation procedure, or to the third use case (UC3) for the communication protocol negotiation procedure, to find an alternative method.

The mobility and the dispenser may derive an agreement for all parameters by repeatedly transmitting and receiving messages and responding to such messages multiple times.

The parameters exchanged between the mobility and the dispenser may include parameters for supporting fueling method compatibility, parameters for physical characteristics, monitoring parameters, and acceptance-related parameters.

Here, the compatibility support-related parameters may include a pressure class, a CHSS category, and the like; the parameters for physical characteristics may include a maximum allowable CHSS pressure, a maximum allowable CHSS temperature, a maximum allowable flow rate, a CHSS volume, and the like; the monitoring parameters may include a current CHSS pressure, a current CHSS temperature, and the like; and the acceptance-related parameters may include a parameter indicating whether it is accepted or not, for example, "true" or "false". For the above parameters, information on one of predefined levels or setting values and information on main UCDC levels that are different from or the same as each other may be set, respectively.

Meanwhile, the dispenser may deliver to the mobility a message that contains information on the parameters supported by the dispenser (<DIS's parameters>, briefly <DIS's params>) and an OK message indicating that the dispenser has completed reception and acceptance of the mobility's parameters.

In addition, the compatibility support-related parameters may include a fueling delivery temperature, a selected fueling table, and the like; the parameters for physical characteristics may include a maximum fueling delivery pressure, a maximum fueling delivery temperature, a minimum fueling delivery temperature, a maximum fueling delivery rate, and the like; the fueling goal-related parameters may include a target SOC, a target final CHSS pressure, a target final CHSS temperature, a target APR, an expected fueling duration, and the like; the monitoring parameters may include a current fueling delivery temperature, an ambient temperature, and the like; and the acceptance-related parameters may include a parameter such as accepted. For the above parameters, information on one of predefined levels or setting values and information on main UCDC levels that are different from or the same as each other may be set, respectively.

As described above, the mobility may provide to the dispenser parameters listed in a table format. The listed parameters may include hydrogen mobility parameters compatible with the UCDC level that is negotiated during the fueling protocol negotiation process.

As described above, once a communication link is established and communication and fueling protocols are selected in the protocol negotiation stage, the mobility and the dispenser may exchange various parameters to check whether they can execute a mutually compatible fueling procedure. Here, the information required to perform a safe and efficient fueling procedure may include compatibility parameters, physical characteristics, fueling goals, monitoring parameters, and the like.

The compatibility parameters may include, for example, a pressure class and a fueling delivery temperature, and the physical characteristics may include, for example, a maximum CHSS pressure and a maximum flow rate. The fueling goals may include a target SOC and a target CHSS pressure, and the monitoring parameters may include a current CHSS temperature and an ambient temperature.

When no compatible parameter can be found and fueling cannot proceed, the hydrogen mobility may return to the communication protocol negotiation stage to attempt another protocol negotiation or may request the dispenser to stop fueling. And, in returning to the communication protocol negotiation stage due to a failure in the fueling parameter exchange stage, the hydrogen mobility such as an FCEV may be configured to propose to the dispenser a set of supported protocols that excludes the protocol that failed in the fueling parameter exchange stage.

According to the fifth use case (UC5) for the fueling parameter negotiation procedure, the vehicle and the dispenser may negotiate specific parameters for the fueling protocol, share static states or dynamic states, and exchange detailed fueling parameters in order to determine fueling goals. Here, when the fueling parameter negotiation fails due to incompatibility, the process may return to the fourth use case (UC4) to select another fueling protocol, or may return to the third use case (UC3) to select another communication protocol, and when such error handling is not properly performed, the current communication may be terminated.

According to the above-described configuration, some fueling protocols may be performed based on non-communication (Non Comm.). Some fueling protocols may require uni-directional IrDA. Some fueling protocols may require bi-directional communication. Some fueling protocols may require both bi-directional communication and uni-directional IrDA. In addition, some fueling protocols may require a predetermined UCDC level or a higher UCDC level. Based on the type or category of the fuel cell electric vehicle and the type or category of the dispenser, at least one fueling protocol may be proposed. The proposed fueling protocols may be proposed with different priorities. Taking into account the priorities of the proposed fueling protocols, and based on whether the communication protocol required by the fueling protocol is supported by the fuel cell electric vehicle and/or the dispenser, the communication protocol and the fueling protocol between the fuel cell electric vehicle and the dispenser may be finally determined. Then, under the determined communication protocol and fueling protocol, fueling parameters may be negotiated.

In a variation of the present embodiment, either the mobility or the dispenser may first transmit fueling parameters to the counterpart, and the counterpart may respond with a message including newly reconstructed fueling parameters, in which the parameters accepted among the received fueling parameters are retained, and the parameters not accepted are modified.

In addition, the mobility and the dispenser may perform parameter negotiation step-by-step. In this case, the mobility and the dispenser may first negotiate a subset of parameters, and then perform a negotiation process or an exchange process for sub-parameters of the parameters for which agreement has been reached.

Also, each message that includes fueling parameters may be set such that, if a response message is not received within a preset message processing time, the message is regarded as having failed to reach agreement.

Table 15 below illustrates the contents of a message including the fueling parameters on the mobility side according to the present embodiment.

**[Table 15]**

| Name | Unit | Precision | Range / Value | Type | Semantics |
|---|---|---|---|---|---|
| Pressure Rating | N/A | N/A | {H35, H70} | Static | Rated pressure class of the hydrogen tank. |
| CHSS Volume | Liter | 2 decimals | Positive, No-max | Static | Storage capacity of the hydrogen tank. |
| CHSS Pressure | MPa | 2 decimals | Positive, No-max | Dynam ic | Current pressure of the hydrogen tank. |
| Emergency Policy | N/A | N/A | {Terminate,Fallback} | Static | Predefined emergency-handling policy |

Table 16 below illustrates the contents of a message including the fueling parameters on the dispenser side according to the present embodiment.

**[Table 16]**

| Name | Unit | Precision | Range / Value | Type | Semantics |
|---|---|---|---|---|---|
| Fueling Delivery Temperature | N/A | N/A | {H35, H70} | Static | ... |
| Fueling Temperature | MPa | 2 decimals | Positive, No-max | Dynamic | Current pressure of the tank |
| Emergency Policy | N/A | N/A | {Terminate,Fallback} | Static | Emergency handling policy |

In the fueling parameter negotiation stage, the mobility and the dispenser may generate a message having a range or values of the supported parameters (fueling parameters) and may deliver the message to the counterpart. The parameters related to the fueling parameter negotiation may include physical characteristics-related parameters (referred to simply as "physical parameters"), monitoring parameters, safety-policy-related parameters, and acceptance-related parameters.

Here, the physical parameters may include a receptacle type, a pressure class, a CHSS category, a CHSS type, a CHSS volume, a maximum allowable CHSS pressure, a maximum allowable CHSS temperature, and a maximum allowable rate; the monitoring parameters may include a current CHSS pressure and a current CHSS temperature; the safety-policy-related parameters may include an emergency policy and a safety enforcement level; and the acceptance-related parameter may include a parameter indicating whether it is accepted or not, for example, true, false, or pending.

In addition, the physical parameters may include a fueling delivery temperature, a maximum fueling delivery pressure, a maximum fueling delivery temperature, a minimum fueling delivery temperature, and a maximum fueling delivery rate; the monitoring parameters may include a current fueling delivery temperature and an ambient temperature; the fueling-goal-related parameters may include a selected fueling table, a target SOC, a target final CHSS pressure, a target final CHSS temperature, a target APR, and an expected fueling duration; and the acceptance-related parameter may include a parameter such as accepted. For the above parameters, information corresponding to one of preset levels or preset setting values and information corresponding to different or identical main UCDC levels may be respectively set.

In this manner, the hydrogen electric vehicle may provide to the dispenser parameters listed in a table form. The listed parameters may include FCEV parameters compatible with the UCDC level negotiated in the fueling protocol negotiation stage.

Meanwhile, after receiving the fueling parameter negotiation request message, if the received fueling parameters are compatible with the dispenser, the dispenser may respond with its own fueling parameters by transmitting to the FCEV, within a preset message-response time, a fueling parameter negotiation response message in which the "result" is set to "OK". Such a response message may be implemented as the fueling parameter negotiation response message (1800) in JSON format as illustrated in FIG. 18.

Also, after receiving the fueling parameter negotiation request message, if the dispenser finds that the vehicle's fueling parameters are incompatible, the dispenser may respond to the hydrogen electric vehicle by transmitting a fueling parameter negotiation response message in which the "result" is set to "Fail", in order to indicate the incompatibility for the corresponding hydrogen electric vehicle. The result represents a value or information contained in the resultcode field, and the failure may be expressed as an expression indicating incompatibility, for example, "FAIL_INCOMPAT", as a failure at a specific time or attempt.

Furthermore, after receiving the fueling parameter negotiation request message, if the hydrogen mobility finds that the fueling parameters of the dispenser are incompatible, the hydrogen mobility may indicate the incompatibility to the dispenser by transmitting to the dispenser an error-notification request message with a "reason" set to a respective predefined error code.

Table 17 illustrates the fueling parameters on the mobility side that may be adopted in the messages used for bidirectional communication according to the present embodiment.

**[Table 17]**

| Physical Parameters | |
|---|---|
| Receptacle Type | ? |
| Pressure Class | H35/H70 |
| CHSS Category | A/B/C/D |
| CHSS Type | 1/2/3/4 |
| CHSS Volume | ? L |
| Maximum allowed CHSS Pressure | ? MPa |
| Maximum allowed CHSS temp. | ? °C |
| Maximum allowed flow rate | ? g/s |

| Monitoring Parameters | |
|---|---|
| Current CHSS Pressure | ? MPa |
| Current CHSS Temp. | ? °C |

| Safety Policy | |
|---|---|
| Emergency Policy | ? |
| Safety Enforcement Level | ? |
| Acceptance | |
| Accepted | TRUE/FALSE/PENDING |

Table 18 illustrates the fueling parameters on the dispenser side that may be adopted in the messages used for bidirectional communication according to the present embodiment.

**[Table 18]**

| Physical Parameters | |
|---|---|
| fueling Delivery Temp. | T30 |
| Max Fuel Delivery Pressure | ? MPa |
| Max Fuel Delivery Temp. | ? °C |
| Min Fuel Delivery Temp. | ? °C |
| Mass Fuel Delivery Flow Rate | ? g/s |

| Monitoring Parameters | |
|---|---|
| Current Fuel Delivery Temp. | ? °C |
| Ambient Temperature | ? °C |

| Fueling Goal | |
|---|---|
| Selected fueling Table | D1 |
| Target SOC | ?% |
| Target Final CHSS Pressure | ? MPa |
| Target Final CHSS Temperature | ? °C |
| Target APR | ? MPa/s |
| Expected fueling Duration | ? °C |
| Safety Policy | ? s |

| Acceptance | |
|---|---|
| Accepted | TRUE/FALSE/PENDING |

According to the present embodiment, the communication method may further include a procedure of renegotiating one or more of the communication protocol or the fueling parameters when the fueling parameters are incompatible between the mobility and the dispenser as a result of the fueling parameter negotiation (see S505 of FIG. 5). The renegotiation procedure may include re-performing the above-described communication protocol negotiation step, the fueling protocol negotiation step, and the fueling parameter negotiation step. For example, the renegotiation procedure may return to the communication protocol negotiation step to perform renegotiation from the communication protocol negotiation step, and sequentially re-perform the fueling protocol negotiation step and the fueling parameter negotiation step. As another example, the renegotiation procedure may return to the fueling protocol negotiation step to perform renegotiation from the fueling protocol negotiation step, and then re-perform the fueling parameter negotiation step.

In addition, the renegotiation step may be configured to simplify or omit part of the above negotiation steps. That is, the renegotiation step may be configured to negotiate the communication protocol and the fueling protocol together by combining part of the above negotiation steps.

In addition, the renegotiation step may be renegotiated based on the remaining communication protocol and fueling protocol list excluding the communication protocol or fueling protocol selected in the communication protocol negotiation step and the fueling protocol negotiation step. For example, based on compatibility and/or interoperability information identified in the discovery and pairing step, the communication protocol and the fueling protocol may be renegotiated based on a protocol list including communication protocols and fueling protocols not previously selected, depending on mutual supportability between the communication protocol and the fueling protocol.

In addition, the communication method according to the present embodiment may determine a third communication protocol and a third fueling protocol based on a preset policy when the fueling parameters are incompatible between the mobility and the dispenser as a result of the fueling parameter negotiation, and may be configured to perform hydrogen fueling based on the third communication protocol and the third fueling protocol. In this case, a third fueling parameter may be determined based on the third fueling protocol, and the hydrogen fueling procedure may be performed based on the third fueling protocol and the third fueling parameter.

For example, when communication between the mobility and the dispenser becomes unavailable due to changes in the communication environment, the dispenser may fall back to no-communication (No Communication) and perform a hydrogen fueling procedure using a hydrogen fueling protocol based on no-communication.

In addition, the bidirectional communication method may perform a step of terminating communication between the dispenser and the mobility when the fueling parameters are incompatible between the mobility and the dispenser as a result of the fueling parameter negotiation.

FIG. 19 is an exemplary view for explaining a safety check-in request message applicable to the safety check-in procedure and the functional blocks of the fueling framework of FIG. 5. FIG. 20 is an exemplary view for explaining a safety check-in response message applicable to the safety check-in procedure and the functional blocks of the fueling framework of FIG. 5.

Referring to FIGS. 19 and 20, in the safety check-in procedure, the mobility and the dispenser can confirm each other by sharing the result (result) of whether all safety conditions required before actual fueling starts are satisfied, by using a safety check-in request (SafetyCheckInReq) message and a safety check-in response (SafetyCheckInRes) message.

The safety check-in request (SafetyCheckInReq) message and/or the safety check-in response (SafetyCheckInRes) message may be configured to include fields indicating "OK" for the safety check-in result for at least one inspection item.

That is, after receiving a fueling parameter negotiation response message from the dispenser, when the fueling protocol supports safety check-in, the mobility may transmit a safety check-in request message to the dispenser within a message sequence setup time to initiate the safety check-in step. In addition, the dispenser may transmit a safety check-in response message to the mobility within a message sequence setup time to initiate the safety check-in step.

In the safety check-in step, the mobility and/or the dispenser may check whether the nozzle-receptacle is stably fixed, check for leakage, and check the last-minute status before performing fueling.

For example, the mobility and the dispenser may exchange messages for a coupler check. The mobility may transmit a message including information (e.g., Mobility: OK) indicating its coupler check result to the dispenser, and the dispenser may transmit a message including information (e.g., Dispenser (DP): OK) indicating its coupler check result to the mobility.

In addition, the mobility and the dispenser may exchange messages related to gas leak check. While exchanging messages related to leak check, the dispenser may transmit to the mobility information indicating that the leak check is ongoing. The mobility may transmit to the dispenser information indicating that it is waiting for the dispenser's leak check result. When the leak check is completed, the dispenser may transmit to the mobility a message requesting the measured tank volume, together with leak-check-done (Done) information.

In addition, the dispenser may transmit a message for a status check of immobilized state to the mobility, and the mobility may transmit a message indicating that it is ready for the status check to the dispenser.

When the mobility reports the parameters of its current state or immobilization status to the dispenser, the dispenser may report to the mobility parameters such as the coupler lock status, the leak check status, and the predicted mobility tank volume.

For example, as a result of processing the safety check-in request message, the mobility and/or the dispenser may respond with an "OK" result when successful, or otherwise respond to the counterpart with a "PENDING" result or a "FAILED" result.

Referring again to FIG. 5, the objectives, short description, pre-conditions, and post-conditions of the use case (UC6) of the Safety Check-in step may be represented as shown in Table 19 below.

**[Table 19]**

| Type | Description |
|---|---|
| Use Case Name | UC-6: "Safety Check-In" |
| Purpose | The vehicle and the dispenser confirm that all required safety conditions are satisfied and that the communication link is correctly paired with the pairing channel before the actual fueling begins. |
| Overview | After fueling parameters are exchanged and the vehicle and the dispenser are regarded as compatible, the vehicle and the dispenser perform a safety status check and pairing check to verify that fueling is safe and communication is stable. |
| | Depending on the fueling protocol and the communication physical layer, safety confirmation may be implicitly performed inside the protocol or the physical connection, and this safety check-in step may be omitted. |
| Pre-conditions | Required fueling parameters are exchanged. |
| Post-conditions | The vehicle and the dispenser confirm all safety conditions and pairing accuracy, and become ready to start fueling. |

As described above, when the fueling parameter negotiation stage is successfully performed, the fueling protocol may perform the safety check-in stage. In this case, when the communication physical layer is specified to require a pairing procedure, the mobility and the dispenser may re-check the pairing in the safety check-in stage before dispensing hydrogen. Even when the communication physical layer is not specified to require a pairing procedure, the mobility and the dispenser may re-check the pairing in the safety check-in stage before dispensing hydrogen.

For example, after receiving, from the dispenser, information indicating completion of the fueling parameter negotiation stage through a FuelParamNegoRes message, the mobility may transmit, to the dispenser, a message indicating the start of the safety check-in stage, for example, a SafetyCheckInReq message, within a predetermined time interval, for example, a MessageSequenceTimeout, when the fueling protocol supports the safety check-in stage.

As an alternative embodiment, when a message indicating completion of the fueling parameter negotiation stage is transmitted by either the mobility or the dispenser to the counterpart, the transmitting side or the counterpart may transmit a message indicating the start of the safety check-in stage.

According to the present embodiment, messages transmitted and received in the safety check-in stage may be defined based on the contents of each fueling protocol specified in standards such as ISO 19885-3.

In addition, according to the present embodiment, messages transmitted and received in the safety check-in stage may include, as a result element, a result value obtained from processing the request message. The result value that may be provided as the result element may include "OK" when successful, "FAILED" when failed, and "PENDING" in other cases.

When the mobility transmits a SafetyCheckInReq message to the dispenser and all safety conditions are satisfied, the result value of the message may be set to "OK". Meanwhile, when some safety conditions are not yet satisfied when the mobility transmits the safety check-in request message to the dispenser, the result value of the message may be set to "PENDING".

After receiving the safety check-in request message from the mobility, the dispenser may transmit, to the mobility, a SafetyCheckInRes message including safety check parameters within a MessageResponseTimeout.

When the dispenser transmits the safety check-in response message to the mobility and all safety conditions are satisfied, the result value of the message may be set to "OK". Meanwhile, when some safety conditions are not yet satisfied when the dispenser transmits the safety check-in response message, the result value of the message may be set to "PENDING".

When the mobility receives, from the dispenser, a safety check-in response message in which the value of the result element is set to "PENDING", the mobility may transmit another safety check-in request message to the dispenser within the message response time limit.

In addition, when the dispenser receives, from the mobility, a safety check-in request message in which the value of the result element is set to "PENDING", the dispenser may transmit another safety check-in response message to the mobility within the message response time limit.

When the mobility or the dispenser cannot confirm all safety conditions within a predetermined time, for example, a UC Safety Check-In Timeout, the mobility or the dispenser may transmit an error notification request (ErrNotifReq) message to the counterpart with a "reason" field set to an appropriate error code.

Meanwhile, the mobility or the dispenser may transmit, to the counterpart, a request message indicating the start of the safety check-in, and the counterpart may return a response message to the safety check-in request message within a predetermined time interval.

When the above-described safety check-in stage is passed, fueling may start. During fueling, the mobility and the dispenser may exchange information and monitor various state parameters so that fueling is performed safely and efficiently. When necessary, the mobility or the dispenser may transmit a control message requesting an action from the counterpart to control the fueling stage or respond to safety-related conditions. Parameters and commands to be exchanged may vary depending on the actual fueling protocol.

As described above, after fueling parameters are exchanged and confirmed to be compatible between the mobility and the dispenser, the mobility and the dispenser may perform a safety status check to ensure that fueling is safe. Meanwhile, depending on the fueling protocol, the safety check may be implicitly performed within the protocol, and the safety check-in stage may be omitted depending on the implementation.

As an alternative embodiment, when the safety check-in stage performs a minimal status confirmation, that is, checking safety elements including whether the nozzle and the receptacle are coupled and their coupling status, the safety check-in stage may be performed before the fueling parameter negotiation stage.

As another alternative embodiment, when the safety check-in stage performs a minimal status confirmation, that is, checking safety elements including whether the nozzle and the receptacle are coupled and their coupling status, safety elements not checked in the safety check-in stage may be negotiated and checked in the fueling parameter negotiation stage.

As another alternative embodiment, when the safety check-in stage performs a minimal status confirmation, that is, checking safety elements including whether the nozzle and the receptacle are coupled and their coupling status, safety elements not checked in the safety check-in stage may be monitored and checked in the monitoring and control stage following the safety check-in stage. In this case, the safety elements may be monitored and checked in the monitoring and control stage regardless of or independently of whether they are negotiated and checked in the fueling parameter negotiation stage.

As another alternative embodiment, a plurality of safety elements including the safety element checked in the safety check-in stage may be negotiated and checked in the fueling parameter negotiation stage.

In an alternative embodiment, a plurality of safety elements including the safety element checked in the safety check-in stage may be monitored and checked in the monitoring and control stage. In this case, the safety elements may be monitored and checked in the monitoring and control stage regardless of or independent of whether they are negotiated and checked in the fueling parameter negotiation stage.

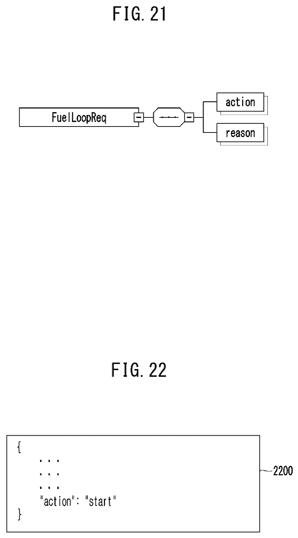

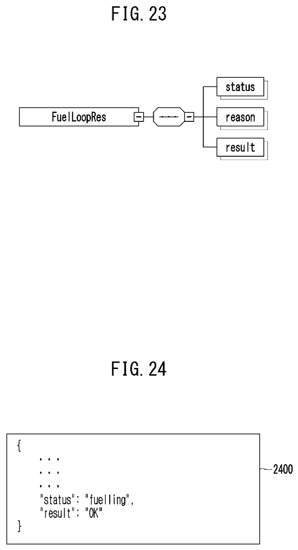

FIG. 21 is an exemplary diagram illustrating a monitoring and control request message that may be applied to the monitoring and control procedure and its functional blocks in the fueling framework of FIG. 5. FIG. 22 is an exemplary diagram illustrating a JSON message format of the monitoring and control request message of FIG. 21. FIG. 23 is an exemplary diagram illustrating a monitoring and control response message that may be applied to the monitoring and control procedure and its functional blocks in the fueling framework of FIG. 5. FIG. 24 is an exemplary diagram illustrating a JSON message format of the monitoring and control response message of FIG. 23.

Referring to FIGS. 21 to 24, in the monitoring and control procedure, the mobility and/or the dispenser may monitor the fueling status and control the fueling process when necessary through a fueling loop request (FuelLoopReq) message and a fueling loop response (FuelLoopRes) message.

A FuelLoopReq message may include information or a field for initiating an action related to fueling. For example, as illustrated in FIG. 21, a FuelLoopReq message 2200 may include information indicating whether at least one predefined action is to be performed and information indicating a reason for the at least one action.

In addition, as illustrated in FIG. 22, the FuelLoopReq message 2200 may be expressed in a JSON format, and the action field may include predefined information, for example, "start," to initiate hydrogen fueling for the fuel cell electric vehicle.

A FuelLoopRes message may include information indicating a status, a reason, and a result for the current action, as illustrated in FIG. 23. Also, as illustrated in FIG. 24, the FuelLoopRes message (2400), expressed in JSON format, may include in its status field information indicating that the current status is fueling (for example, "fueling" or "fuelling"), and in its result field information indicating that the monitoring result and control state are normal (for example, "OK").

When all safety checks are confirmed, the mobility and the dispenser may start fueling according to the pre-selected fueling protocol using the given parameters. During fueling, the mobility and the dispenser may exchange various measured data to determine the fueling status and to detect safety-critical incidents as quickly as possible.

The mobility may transmit specific commands to the dispenser to control fueling stages such as the start and end of fueling. In this case, the mobility may use UDP with DTLS for communication to support black-channel communication. The black-channel communication refers to communication applying the black-channel principle, in which safe communication must be guaranteed regardless of the unsecured properties or application-unrelated properties of the communication channel.

To describe the monitoring and control stage in more detail as an example, the mobility may transmit a message to the dispenser to initiate fueling control, and in response, the dispenser may transmit to the mobility a message including confirmation information (e.g., OK).

In addition, the mobility may transmit to the dispenser a message including information about its fueling loop (e.g., x, y, z), and the dispenser may transmit to the mobility a message including information about its own fueling loop corresponding to the mobility's fueling loop (e.g., a, b, c).

Also, the mobility may transmit to the dispenser a fueling control request message including information to slow down fueling or reduce the fueling amount, and the dispenser may transmit to the mobility a response message including information indicating a decrease or slowdown in fueling status (e.g., "slowing").

Further, the mobility may transmit to the dispenser a fueling control request message requesting a stop of fueling, and the dispenser may transmit to the mobility a fueling status response message including information indicating that fueling is being stopped or has been stopped (e.g., "stopping/stopped").

In this manner, the mobility and the dispenser may continuously or periodically exchange parameters related to the fueling status during the monitoring and control stage. The mobility may transmit its current tank temperature, current tank pressure, and the like to the dispenser, and the dispenser may transmit to the mobility parameters related to fueling start, stop, ramping up, ramping down, current delivery pressure, and future fueling plans.

A request message related to the monitoring and control procedure transmitted from the mobility to the dispenser may include information or parameters related to fueling start, pause, resume, and termination. In addition, messages related to reporting, transmitted from the mobility to the dispenser, may include information or parameters related to the current tank temperature, current tank pressure, and so forth.

Messages related to reporting, transmitted from the dispenser to the mobility, may include information or parameters related to state information, current ambient temperature, current pressure ramp rate (PRR [Mbar/min]), delivered fuel flow rate [g/sec], current fueling delivery temperature, pre-cooling temperature, current fueling delivery pressure, whether a full-fill mode is active, whether a cooling dispenser is active, whether fallback is active, reasons for fueling stop, and the current amount of hydrogen fueled.

In addition, messages related to target parameter updates delivered from the dispenser to the mobility may include information or parameters regarding the target final tank pressure, the target final tank temperature, the target fueling APR, the target SOC, the current SOC, and the estimated remaining duration.

The objectives, short description, pre-conditions, and post-conditions of the seventh use case (UC7), which relates to the monitoring and control procedure-that is, the fueling control and monitoring procedure-may be defined as shown in Table 20.

**[Table 20]**

| Type | Description |
|---|---|
| Use Case Name | UC7: "Monitoring and Control" |
| Purpose | The vehicle and the dispenser monitor the fueling status and control fueling when necessary. |
| Overview | After all safety checks are confirmed, the vehicle and the dispenser start fueling according to the selected fueling protocol using the given parameters. During fueling, the vehicle and the dispenser exchange various measurement data to understand the fueling status and detect safety-critical incidents as early as possible. The vehicle may submit specific commands to the dispenser to control fueling procedures such as starting and ending fueling. UDP with DTLS is used for communication to support black-channel communication. |
| Pre-conditions | All safety checks are confirmed, and the vehicle and the dispenser are prepared for fueling. |
| Post-conditions | Fueling is successfully completed. |

As described above, after the safety check-in step is successfully performed, the fueling protocol may perform the monitoring and control step. The monitoring and control step may be referred to as the fueling control and monitoring step. Meanwhile, when TCP is used in the monitoring and control procedure-that is, when the safety check-in response message or the safety check-in step defined by the fueling protocol is omitted-the mobility, after receiving the fueling parameter negotiation response message from the dispenser, may transmit a fueling loop request (FuelLoopReq) message to the dispenser within the message sequence setup time. Request messages and response messages related to the fueling loop may be transmitted as DTLS messages.

When the safety check-in step is omitted, the monitoring and control step may be performed after the fueling parameter negotiation step is successfully completed. During the monitoring and control step, the dispenser may perform all necessary steps to fuel the mobility. When the TCP specification is used in the fueling control and monitoring use case, the mobility, after receiving the SafetyCheckInRes message or, in embodiments where the safety check-in step is omitted, after receiving the FuelParamNegoRes message, may transmit a message requesting the start of the monitoring and control step-for example, a FuelLoopReq message-to the dispenser within a predefined time interval such as the MessageSequenceTimeout.

When the above-described black-channel method is used, after transmitting the SafetyCheckInRes message or, when the safety check-in step is omitted, after transmitting the FuelParamNegoRes message, the mobility as a client and the dispenser as a server may initiate a DTLS 1.3 handshake following predetermined rules (for example, RFC 9147), together with session resumption using a NewSessionTicket. The NewSessionTicket may be received from the dispenser. In this case, 0-RTT may not be used for DTLS session resumption.

After the DTLS 1.3 handshake is successfully finished, the mobility may transmit a message requesting the start of the monitoring and control step-for example, a FuelLoopReq message-to the dispenser within a predefined time interval.

The fueling loop request message and its response-that is, the FuelLoopRes message-may all be transmitted according to the DTLS message specification. Additional requirements necessary for the black-channel method may also be applied. The fueling loop request message may be implemented based on the definitions of each fueling protocol.

The fueling protocol includes static or dynamic data in the fueling loop request message and the fueling loop response message. The static or dynamic data may be specified to monitor the fueling status and to exchange safety-related information.

Element names included in the fueling loop request message may include action and reason, and may be defined as shown in Table 21 below. Elements not shown in Table 21 may be specified by each fueling protocol specification according to predetermined standards, for example ISO 19885-3.

**[Table 21]**

| Element Name | Type | Meaning |
|---|---|---|
| Action | actionType | Optional: Action requested by the vehicle to the |
| | | dispenser: |
| | | - start |
| | | - stop |
| | | - Any custom actions defined by fueling protocol |
| Reason | reasonType | Optional: Reason for the action request |

In the seventh use case (UC7) of the monitoring and control procedure, element names included in messages transmitted and received between the mobility and the dispenser-such as the fueling loop response (FuelLoopRes) message-may include status, reason, and result, and may be defined as shown in Table 23 below. Elements not shown in Table 22 may be specified by each fueling protocol specification, for example ISO 19885-3.

**[Table 22]**

| Element Name | Type | Meaning |
|---|---|---|
| Status | statusType | Optional: |
| | | - preparing |
| | | - precooling |
| | | - fueling |
| | | - standby |
| | | - faulted |
| | | - ramping-up |
| | | - ramping-down |
| | | - stopping |
| | | - finished |
| | | - stopped_error |
| | | - stopped _requested |
| | | - stopped_unknown |
| | | - Any custom status codes defined by fueling |
| | | protocol |
| Reason | reasonType | Optional: Reason for stopping when the fueling is stopped abnormally |
| Result | resultType | Result of processing the request message. |
| | | If successful, "OK", otherwise "FAILED". |

When the mobility transmits a fueling loop request message to the dispenser, the dispenser may be expected to conduct the corresponding action. The mobility may set the "action" field to a desired action code and transmit the message. In this case, the action code may be defined by the fueling protocol. After receiving a fueling loop request message from the mobility-for example, a fueling loop request message with "action" set to "start"-and if the dispenser is ready to start, the dispenser may start the fueling procedure using the negotiated method and may transmit a fueling loop response message with "result" set to "OK" to the mobility. In addition, after receiving a fueling loop request message from the mobility-for example, a request message with "action" set to "start"-and if the dispenser is not ready to start, the dispenser may transmit a fueling loop response message with "result" set to "pending" to the mobility. Furthermore, after receiving a fueling loop request message from the mobility-for example, a request message with "action" set to "stop"-and if the dispenser is ready to stop, the dispenser may stop the fueling procedure as defined by the fueling protocol and may transmit a fueling loop response message with "result" set to "ongoing" to the mobility.

Additionally, after receiving a fueling loop request message from the mobility-for example, a request message with "action" set to "stop"-and if the dispenser is ready to stop, the dispenser may stop the fueling procedure and may transmit a fueling loop response message with "result" set to "OK" to the mobility.

After receiving a fueling loop request message from the mobility, the dispenser may transmit a fueling loop response message to the mobility within a predetermined time interval, such as the MessageSequenceTimeout.

If the received fueling loop request message has been successfully processed, the dispenser may transmit a fueling loop response message with "result" set to "OK" to the mobility. Meanwhile, if the received fueling loop request message has not been successfully processed, the dispenser may transmit a fueling loop response message with "result" set to "FAILED" or another appropriate error code to the mobility.

The dispenser may transmit a fueling loop response message to the mobility, in which the "status" is set using one of the supported codes specified in a table similar to Table 22 or as specified in the fueling protocol. Also, when fueling is completed (done) and the intended fueling target is achieved, the dispenser may transmit a fueling loop response message with "status" set to "finished" to the mobility.

In addition, when fueling is stopped due to an error-related reason, the dispenser may transmit a fueling loop response message with "status" set to "stop_error" and with "reason" set to an appropriate reason code.

When the "action" of the most recent fueling loop request message is set to "stop" and the fueling has not been completely stopped, the dispenser may transmit a fueling loop response message with "status" set to "stopping" to the mobility.

Additionally, if the "action" of the most recent fueling loop request message is set to "stop" and the fueling has been completely stopped, the dispenser may transmit a fueling loop response message with "status" set to "stopped_requested" to the mobility.

When the mobility transmits a fueling loop request message with "action" set to "stop" to the dispenser, and receives a fueling loop response message with "status" set to "stopping" from the dispenser, the mobility may transmit another fueling loop request message with "action" set to "stop" to the dispenser.

After receiving a fueling loop response message from the dispenser, if fueling has not yet been finished, the mobility may transmit a fueling loop request message to the dispenser within a predetermined time interval such as the MessageSequenceTimeout.

If a safety-critical event occurs, the mobility or the dispenser may transmit an EmergencyReq message to the other party, and each may stop the fueling procedure and shut down the communication.

The above-described fueling control and monitoring procedure has been explained with embodiments in which the mobility requests the start of each step and the dispenser responds; however, the spirit of the present invention is not limited thereto. In an alternative embodiment of the present invention, either the mobility or the dispenser may first transmit a message requesting the start of the fueling control and monitoring procedure, and the other party may perform the procedure by responding to the request message.

In the fueling control and monitoring procedure, a message transmitted by either the mobility or the dispenser may include a monitoring request for the state of the hydrogen fueling procedure. The response message returned by the counterpart may include the requested state information. The states and related parameters that may be the subject of a monitoring request may include the parameter set exchanged in the fueling parameter negotiation stage. The states and related parameters that may be requested for monitoring may include the states and parameters of the mobility and/or the dispenser. The states and related parameters that may be requested for monitoring may include the fueling state and/or related parameters of the mobility and/or the dispenser that change or are maintained according to the hydrogen fueling procedure.

In addition, the states that may be the subject of a monitoring request may include the state and/or information of the fueling procedure itself, during which fuel is dispensed from the dispenser to the mobility. For example, such state information may include whether the fueling procedure is ongoing, paused, or completely terminated, and, if it has been stopped/terminated, whether the stopping was caused by an error or whether the finishing was due to the intended target being achieved.

After completing the hydrogen fueling while performing the above-described monitoring and control procedure, before terminating the session and before disconnecting the nozzle from the mobility, the mobility and the dispenser may confirm whether each satisfies all safety conditions through the safety check-out procedure corresponding to Use Case 8 (UC8, see S508 of FIG. 5). Although such a safety check-out procedure is optional, the fueling protocol may be configured to define a dedicated safety verification step in order to guarantee the desired safety level in an accurate and explicit manner.

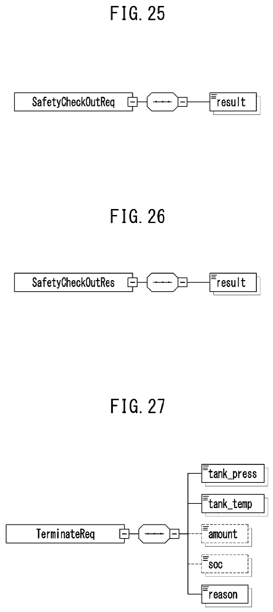

FIG. 25 is an exemplary diagram illustrating a safety check-out request message applicable to the safety check-out procedure and its functional blocks in the fueling framework of FIG. 5. FIG. 26 is an exemplary diagram illustrating a safety check-out response message applicable to the safety check-out procedure and its functional blocks in the fueling framework of FIG. 5.

The safety check-out procedure that may be adopted in the communication method for hydrogen fueling according to the present embodiment may be performed as follows. That is, through the safety check-out step, the mobility and the dispenser may confirm whether all safety conditions required before disconnecting the dispenser nozzle from the receptacle have been satisfied. In other words, after fueling is completed, the mobility and the dispenser may confirm that it is absolutely safe for the user or operator to disconnect the nozzle from the mobility.

For example, as shown in FIGS. 25 and 26, after the mobility receives-from the dispenser-a fueling loop response message in which the "result" is set to "OK," or the "status" is set to "finished," or the prefix indicates "stopped," and if the hydrogen fueling protocol supports safety check-out, the mobility may initiate the safety check-out. In this case, the mobility may transmit a safety check-out request (SafetyCheckOutReq) message to the dispenser within the message sequence timeout, and the dispenser may transmit a safety check-out response (SafetyCheckOutRes) message to the mobility within the message sequence timeout, and the safety check-out process may be performed through such messages.

The mobility and the dispenser may repeatedly report their respective states to each other until all safety checks have been confirmed. If the communication process for hydrogen fueling does not require such final safety confirmation, the use case for safety check-out may be omitted.

To explain the above safety check-out procedure in more detail by way of example, the mobility may transmit to the dispenser a message containing information on the coupler check result (e.g., OK), and the dispenser may transmit to the mobility a message containing information indicating that the coupler check is ongoing (e.g., Ongoing).

Furthermore, the mobility may again transmit to the dispenser a message containing the coupler check result information (e.g., OK), and the dispenser may transmit to the mobility a message containing coupler check completion information (e.g., Done).

Once the above-described coupler check completion information is confirmed to be successfully completed, the nozzle of the dispenser may be disconnected from the receptacle of the mobility by the user or operator.

In the above-described safety check-out step, the reporting message transmitted by the dispenser to the mobility may include information or parameters regarding the coupler unlock status. The coupler unlock status information may include information regarding locked, unlocked, icing, problem, and so on.

The purpose, brief description, pre-conditions, and post-conditions of the Use Case 8 (UC8) for the Safety Check-out step may be defined as illustrated in Table 23 below.

**[Table 23]**

| Type | Description |
|---|---|
| Use Case Name | UC8: "Safety Check-Out" |
| Purpose | The vehicle and the dispenser confirm that all required safety conditions are satisfied before separating the nozzle from the receptacle. |
| Overview | After fueling is completed, the vehicle and the dispenser confirm whether it is absolutely safe for the user or operator to pull out the nozzle from the vehicle. The vehicle and the dispenser repeatedly report the status until all safety checks are confirmed. If the fueling protocol does not require these final safety checks, this use case may be omitted. |
| Pre-conditions | Fueling is finished. |
| Post-conditions | It is safe to pull the nozzle out from the receptacle. |

The safety check-out step may be performed so as to ensure that the mobility and the dispenser satisfy the safety conditions before terminating the session after the fueling has been finished and before unplugging the nozzle from the mobility. Although the safety check-out step is optional, a dedicated safety check-out procedure may be defined by the fueling protocol in order to guarantee the desired safety level in an accurate and explicit manner. When the fueling procedure associated with the monitoring and control step has been successfully finished, the fueling protocol may perform the safety check-out step. The information exchange used in the safety check-out step may be used for the purpose of diagnosis and responsibility verification when a safety-related event occurs. Regardless of whether the safety check-out is performed, a fueling protocol compliant with ISO 19885-2 may define a set of safety conditions that must be confirmed between the mobility and the dispenser before unplugging the nozzle.

After receiving, from the dispenser, a fueling loop response message in which "Result" is set to "OK," or "status" is set to "finished" or to a value prefixed with "stopped," if the fueling protocol supports the safety check-out, the mobility may transmit, within a predetermined time interval, a message requesting the start of the safety check-out step-for example, a SafetyCheckOutReq message-to the dispenser via a TLS channel.

In this case, if the connection of the TCP/TLS channel is released, the mobility may re-establish the TCP/TLS channel with the dispenser. The reestablishment process may be initiated by a TLS-resumption handshake using a new session ticket received before transmitting the safety check-out request message.

As an alternative embodiment, the message requesting the start of the safety check-out step may be transmitted to the counterpart by either the mobility or the dispenser. In this case, the counterpart may perform the safety check-out step by responding to the message requesting the start of the safety check-out.

According to the present embodiment, the messages transmitted or received in the safety check-out step may be defined based on the contents of each fueling protocol specified in standards such as ISO 19885-3.

According to the present embodiment, the messages transmitted or received in the safety check-out step may include, as a result type, the result value obtained from processing the request message. The result value that may be provided as the result type may include, for example, "OK" when the safety check-out is successful, "FAILED" when it fails, and "PENDING" in other cases.

When the mobility confirms that all safety conditions are satisfied when transmitting the safety check-out request message to the dispenser, the result value of that message may be set to "OK." If, when transmitting the safety check-out request message to the dispenser, some of the safety conditions are not yet satisfied, the result value of that message may be set to "PENDING."

After receiving a safety check-out request message from the mobility, the dispenser may respond to the mobility with a safety check-out response message including safety-check parameters within the message sequence time limit. If the dispenser confirms that all safety conditions are satisfied when transmitting the safety check-out response message to the mobility, the result value of that message may be set to "OK." If some of the safety conditions are not yet satisfied when the dispenser transmits the safety check-out response message to the mobility, the result value of that message may be set to "PENDING."

If the mobility receives a safety check-out response message from the dispenser in which the result value is set to "PENDING," the mobility may transmit another safety check-out request message to the dispenser within the message sequence time limit. If the dispenser receives a safety check-out request message in which the result value is set to "PENDING," the dispenser may transmit another safety check-out request message to the mobility within the message sequence time limit.

If either the mobility or the dispenser cannot confirm all safety conditions within a predetermined time-for example, within the use-case safety check-out timeout-such party may transmit to the counterpart an error notification request (ErrNotifReq) message in which the "reason" field is set to an appropriate error code.

As an alternative embodiment, either the mobility or the dispenser may transmit to the counterpart a request message indicating the start of the safety check-out, and the counterpart may respond with a response message to the request for the safety check-out within a predetermined time interval.

When the fueling according to the above-described hydrogen fueling protocol has been completed and the nozzle has been safely disconnected, or when a problem that is not safety-critical occurs during another use case, the termination procedure corresponding to Use Case 9 (UC9) may be performed.

Meanwhile, although some of the safety conditions checked or monitored during the above-described safety check-in step, the monitoring and control step, and the safety check-out step are illustrated in Table 19 and others, the following matters may be additionally or complementarily considered.

That is, the safety conditions may include elements related to the safety of both the mobility for hydrogen fueling and the hydrogen charger or dispenser, and/or may include the engagement state of the nozzle and the receptacle for initiating hydrogen fueling. In addition, on the mobility side, the safety conditions may further include pressure, temperature, etc. inside the hydrogen tank. In addition, on the hydrogen station side, the safety conditions may include cylinder temperature, fueling pressure, ambient temperature, and so on. Furthermore, the safety conditions on the connection and fueling loop between both sides may include the nozzle-receptacle engagement state-that is, whether engaged, the engagement condition, leakage state, etc. Here, the nozzle-receptacle engagement state may include information on whether the condition is appropriate and/or sufficient for performing the hydrogen fueling procedure.

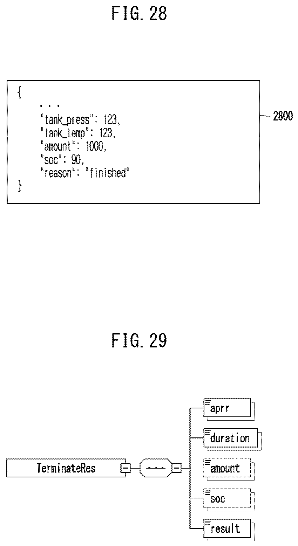

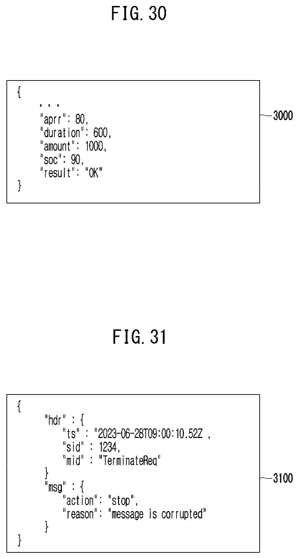

FIG. 27 is an exemplary diagram illustrating a termination request message applicable to the termination procedure and its functional blocks of the fueling framework of FIG. 5. FIG. 28 is an exemplary diagram illustrating a JSON message format of the termination request message of FIG. 27. FIG. 29 is an exemplary diagram illustrating a termination response message applicable to the termination procedure and its functional blocks of the fueling framework of FIG. 5. FIG. 30 is an exemplary diagram illustrating a JSON message format of the termination response message of FIG. 29.

The termination procedure, which may be adopted in the communication method for hydrogen fueling according to the present embodiment, may be the final step of the hydrogen fueling procedure, in which the mobility and the dispenser exchange information regarding the fueling result about the fueling performance and method, and/or information regarding the reason for unexpected interruption of fueling, thereby completing all procedures of the hydrogen fueling. Use Case 9 (UC9) corresponding to the termination procedure (see S509 of FIG. 5) may also be configured to handle tasks related to problems that are not safety-critical.

For example, as illustrated in FIGS. 27 to 30, after the mobility receives from the dispenser a safety check-out response message in which the "result" is set to "DONE," or receives a fueling loop response message in which the "status" is set to "finished" or is prefixed with "stopped," the mobility may transmit a termination request (TerminateReq) message to the dispenser and receive a termination response (TerminateRes) message from the dispenser, thus performing the termination procedure.

The termination procedure of Use Case 9 will be described in greater detail. As illustrated in FIGS. 27 and 28, the mobility may deliver to the dispenser a termination request message (2800) including fields, parameters, and/or values regarding tank pressures, tank temperature, amount (of fueling), state of charge (SOC), and the reason for termination.

In addition, the mobility may deliver to the dispenser a confirmation request message regarding the completion of fueling, and the dispenser may deliver to the mobility a good-bye message as a response message to the confirmation request message.

In addition, as illustrated in FIGS. 29 and 30, the mobility may receive from the dispenser a termination response message (3000) including fields, parameters, and/or values regarding an average pressure ramp rate (APR), duration of fueling, fueled amount, state of charge (SOC) of the vehicle tank, and result. The dispenser may deliver to the mobility a response message including information regarding the amount of hydrogen fueled (for example, X gram) in response to the mobility's query message or termination request message.

Meanwhile, after the fueling is completed and the safety checks are confirmed, the mobility and the dispenser may exchange, in the termination step, at least part of the book-keeping information regarding the hydrogen fueling session. Before completing the termination procedure, the mobility and the dispenser may exchange summary information regarding the hydrogen fueling session.

The book-keeping information may include all information related to the hydrogen fueling that is recorded in the mobility or the dispenser across all fueling sessions for hydrogen fueling and before completing Use Case 9 (UC9) of the termination procedure according to predetermined rules or policies.

The book-keeping information or the summary information may include information regarding how much fuel has been delivered and what reports have been generated. In addition, the reporting message delivered from the mobility to the dispenser may include information or parameters regarding the current tank temperature and the current tank pressure, and the reporting message delivered from the dispenser to the mobility may include information regarding the final SOC, final average fueling rate (APR), finally measured tank pressure, actual fueling duration, actual amount of hydrogen fueled, and the like.

When all necessary information regarding the fueling session has been stored, the fueling session may be completely terminated.

When the fueling has been successfully finished and, optionally, all safety conditions have been confirmed, the mobility and the dispenser may perform Use Case 9 (UC9) corresponding to the termination procedure (see S509 of FIG. 5).

The objectives, short description, pre-conditions, and post-conditions of Use Case 9 (UC9) regarding the termination procedure may be defined as illustrated in Table 24 below.

**[Table 24]**

| Type | Description |
|---|---|
| Use Case Name | UC9: "Termination" |
| Purpose | As the final step of fueling, the vehicle and the dispenser exchange information about the fueling result including fueling performance and method, and the reason if fueling was unexpectedly interrupted, and finalize the fueling. This use case handles house-keeping of the termination phase when non-safety-critical issues have occurred. |
| Overview | After fueling is completed and safety checks are confirmed, the vehicle and the dispenser exchange ledger information related to the fueling session. If non-safety-critical issues |
| | have occurred, this use case enables the vehicle and the dispenser to exchange summary information about the fueling session before leaving. |
| Pre-conditions | Fueling has been completed and it is safe to pull out the nozzle. Or, non-safety-critical issues have occurred during another use case. |
| Post-conditions | Information about the fueling session is stored and the fueling session is fully terminated. |

After receiving a safety check-out response message in which the result ("Result") is set to "DONE," or after receiving a fueling loop response message in which the status ("status") is set to a value prefixed with "finished" or "stopped," if the safety check-out use case is omitted, the mobility may transmit a termination request message to the dispenser. Detailed aspects regarding the termination request message may be defined in the respective fueling protocol specifications. For example, the parameters included in and exchanged between the mobility and the dispenser within the termination request message may be defined differently for each individual fueling protocol. The element names included in the termination request message may include tank pressure (tank_press), tank temperature (tank_temp), amount, state of charge (SOC), and reason, and may be defined as illustrated in Table 26 below. Elements that are not exemplified in the contents of Table 25 may be specified by each fueling protocol standard, such as ISO 19885-3.

**[Table 25]**

| Element Name | Type | Meaning |
|---|---|---|
| Tank Pressure | | Final tank pressure |
| Tank Temperature | | Final tank temperature |
| Quantity | | Optional: Amount of hydrogen filled |
| Charging Amount | | Optional: Final charging amount measured by the vehicle |
| Reason | reasonType | Termination reason from the vehicle's point of view. |
| | | If displayed on the dispenser: "completed". |
| | | If the user requested stopping: "stopped_user". |
| | | If the fueling target is achieved: "completed". |
| | | Otherwise: "unknown". |
| | | Other reason codes may be defined according to the fueling protocol. |

Upon receiving a termination request message from the mobility, the dispenser may return a termination response message to the mobility within a predetermined time interval, such as a message response time limit (MessageResponseTimeout). Detailed aspects regarding the termination response message may be defined in the respective fueling protocol specifications. For example, the parameters included in and exchanged between the mobility and the dispenser within the termination response message may be defined differently for each individual fueling protocol. The element names included in the termination response message may include an average pressure ramp rate (APR), fueling duration (duration), amount, state of charge (SOC), and result, and may be exemplified as shown in Table 27 below. Elements not exemplified in the contents of Table 26 may be specified by fueling protocol standards such as ISO 19885-3.

**[Table 26]**

| Element Name | Type | Meaning |
|---|---|---|
| Average Pressure | - | Optional: Average pressure increase rate |
| Ramp Rate | | |
| Duration | - | Optional: Fueling duration |
| Quantity | - | Optional: Amount of hydrogen fueled |
| Charging Amount | - | Optional: Final charging amount measured by the dispenser |
| Result | resultType | - |

Meanwhile, in an alternative embodiment, a message requesting the start of the termination stage may be transmitted by either one of the mobility or the dispenser to the other party. In this case, the other party may perform the termination stage by responding to the message requesting the start of the termination stage. Examples of communication data between the dispenser/charging station and the mobility/vehicle for some of the above-described use cases (UC5 to UC9) are shown in Table 27 below.

**[Table 27]**

| UC Category | Station → Vehicle | Vehicle → Station |
|---|---|---|
| Fueling Parameter Negotiation | Check whether communication is delivered | Check whether communication is delivered |
| | Fueling protocol | Maximum operating pressure |
| | Hydrogen supply (cooling) temperature | Maximum operating temperature |
| | | Maximum operating flow rate |
| | Target fueling pressure | Tank temperature |
| | Expected (estimated) tank temperature after fueling | Tank pressure |
| | | Tank volume |
| | Target fueling amount (SOC %) | Vehicle fueling pressure (350/700, etc.) |
| | Target fueling time | |
| | Ambient temperature | |
| Safety Check-In | Whether nozzle-receptacle is properly connected | Tank temperature |
| | | Tank pressure |
| | Result of hydrogen storage system leakage check | Tank volume |
| | Predicted vehicle tank volume by station (verify suitability using map) | |
| Monitoring and Control | Hydrogen supply (cooling) temperature | Tank temperature |
| | | Tank pressure |
| | Target fueling pressure | Tank volume |
| | Expected (estimated) tank temperature after fueling | Fueling stop request |
| | Target fueling amount (SOC %) | |
| | Ambient temperature | |
| | Target fueling rate | |
| | Actual fueling rate | |
| | Target fueling time | |
| | Actual fueling time | |
| | Fueling flow rate | |
| | Fueling state (start / fueling / stopped / paused) | |
| | Communication status | |
| | Reason when fueling is stopped (normal termination / insufficient station pressure / communication failure) | |
| | Whether top-off is applied | |
| | Whether cold dispenser is used | |
| | Whether fallback is applied | |
| Safety Check-Out | Whether nozzle-receptacle can be separated (separable / icing, etc.) | Tank temperature |
| | | Tank pressure |
| | | Tank volume |
| Termination | Target fueling amount vs actual | |
| | fueling amount | |
| | Target fueling rate | |
| | Actual fueling rate | |
| | Target fueling pressure | |
| | Actual fueling pressure | |
| | Target tank temperature | |
| | Actual tank temperature | |
| | Target fueling time | |
| | Actual fueling time | |

Figure 31 illustrates an example of a JSON message format for an error-handling message applicable to the error-handling procedure and its functional blocks in the fueling framework of FIG. 5. In the communication method for hydrogen fueling according to the present embodiment, the tenth use case (UC10) for the error-handling procedure is intended for cases where the fueling procedure is terminated in a manner similar to normal termination or where communication is suddenly stopped in order to handle a situation in which a non-safety-critical error has occurred.

The error-handling procedure may define error conditions related to the fueling protocol, provide detection criteria, and include corresponding processes such as notification, termination, and fallback mechanisms when an error condition is detected.

The error-handling procedure may be applied when a non-safety-critical error has occurred and further communication is no longer possible. That is, the mobility and the dispenser may handle the occurrence of a non-safety-critical error at any time during fueling in the error-handling procedure. In other words, the mobility and the dispenser may stop fueling, pause the previously operating use case, and then move to the termination use case (UC9).

When the mobility detects an event corresponding to a non-safety-critical error, the mobility may notify the dispenser of the reason for termination through a terminate request (TerminateReq) message (3100) and stop the current fueling session or communication session. The dispenser may terminate the current communication session in response to the terminate request message. If further communication is not possible, the current session may be terminated without additional notification.

The message used for communication for error handling may include a terminate request message (3100) such as that illustrated in FIG. 31. The terminate request message (3100) may include a header (hdr) and a message (msg) body. The header may include attributes for timestamp (ts), session identifier (sid), and message identifier (mid). The message identifier (mid) attribute may include information indicating that the message is a terminate request message, for example "TerminateReq."

In addition, when a non-safety-critical error is detected by the mobility and the communication channel continues to operate, the mobility may set the "action" attribute to "stop" and set the "reason" attribute to an appropriate reason or reason code in the message body of the terminate request message (3100), and may transmit the terminate request message to the dispenser. The appropriate reason or reason code may include information such as "message is corrupted."

The above terminate request message may be transmitted in error situations involving non-safety-critical communication errors, system errors, and qualitative errors, except for cases where recovery is impossible.

That is, for successful fueling, communication must exhibit the expected behavior in accordance with the protocol, and fueling operations must be within the allowable range of the fueling protocol. However, in practice, various abnormal events may occur. Some of these errors are minor and can be handled easily, while others may be unrecoverable and prevent fueling from continuing. Thus, in the error-handling stage, non-safety-critical error conditions are defined, and exemplary error conditions and possible responses are provided.

Examples of communication errors may include communication being disconnected, inability to recognize received data due to encoding errors or syntax errors, or received data being outside the allowable range. System errors may include cases where the dispenser or the mobility detects an important system error internally. Qualitative errors may include cases where communication performance quality does not meet required levels, or data integrity or precision quality does not meet required levels.

In the communication method for hydrogen fueling according to the present embodiment, the error-handling process may perform specific error-handling steps for the above-described error conditions as follows.

First, when a non-safety-critical error occurs and further communication is impossible, the mobility and the dispenser may stop fueling but may take safe measures and stop communication to terminate the session.

Second, when a non-safety-critical error occurs and fueling is interrupted such that fueling is not completed, the fueling protocol may define a fallback mechanism, for example by defining a non-communication fueling method.

Third, when a non-safety-critical error is detected by the mobility and the communication channel is still operational, the mobility may transmit a terminate request message to the dispenser in which the "action" is set to "stop" and the "reason" is set to an appropriate reason code.

Fourth, when a non-safety-critical error is detected by the dispenser and the communication channel is still operational, the dispenser may first stop fueling and may transmit a terminate request message to the mobility in which the "action" is set to "stop" and the "reason" is set to an appropriate reason or reason code.

As described above, the communication method for hydrogen fueling may define error conditions related to the fueling protocol, provide detection criteria, and, when an error is detected according to the detection criteria, may perform an error-handling procedure including notification, termination, and fallback mechanisms.

For successful fueling, communication may be carried out so as to provide behaviors expected according to the protocol. The fueling behavior must remain within the acceptable range defined by the fueling protocol. However, in practice, various abnormal events may occur. Some errors are minor and can be handled easily, while other errors may be unrecoverable and may prevent fueling from continuing.

In this specification, an "error" may refer to an event occurring in the use cases (UC1 through UC9) or during the hydrogen fueling process that may interrupt the progress of fueling.

In the error-handling stage, conditions for non-safety-critical errors, exemplary error conditions, and corresponding responses may be defined.

The objectives, short description, pre-conditions, and post-conditions of the use case (UC10) for the error-handling procedure may be defined as illustrated in Table 28 below.

**[Table 28]**

| Type | Description |
|---|---|
| Use Case Name | UC10: "Error Handling" |
| Purpose | This use case handles situations where a non-safety-critical error occurs by terminating the fueling process similar to normal termination or by suddenly stopping communication. |
| Overview | A non-safety-critical error may occur at any time during fueling. In this case, the vehicle and the dispenser first stop the use case and then move to the termination use case (UC9) to notify both sides of the termination reason and complete the fueling procedure. If further communication is not possible, the communication channel is terminated without additional notification. |
| Pre-conditions | A non-safety-critical error occurs and fueling cannot continue. |
| Post-conditions | The vehicle and the dispenser are notified of the error and fueling is stopped. |

Non-safety-critical error conditions may include, for example, the following errors related to communication errors, system errors, and qualitative errors. Communication errors may include cases where communication is disconnected, cases where the received data cannot be recognized due to encoding or syntactic errors, and cases where the received data is in an unacceptable range. System errors may include cases where the dispenser or the mobility detects its own critical system error. Qualitative errors may include cases where the communication performance fails to meet the required level, or where the data integrity or precision quality fails to meet the required level.

When a non-safety-critical error occurs and further communication becomes impossible, the mobility and the dispenser may stop fueling, take safety steps, stop communication, and terminate the session. Furthermore, when a non-safety-critical error occurs and fueling is interrupted before the fueling procedure is close to completion, the fueling protocol may define a fallback mechanism, for example by defining a non-communication fueling method.

Also, when a non-safety-critical error is detected by the mobility and the communication channel is still operational, the mobility may transmit to the dispenser a terminate request message in which the "action" is set to "stop" and the "reason" is set to an appropriate reason code.

Likewise, when a non-safety-critical error is detected by the dispenser and the communication channel is still operational, the dispenser may first stop fueling and may transmit to the mobility a terminate request message in which the "action" is set to "stop" and the "reason" is set to an appropriate reason code.

The fueling protocol may define error conditions related to the protocol and may provide prescribed response procedures including detection criteria, notification procedures, termination procedures, and fallback mechanisms.

Meanwhile, during fueling in a hydrogen fueling system, a safety-critical issue may occur that requires an urgent response.

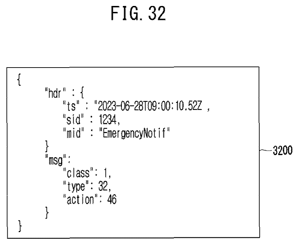

FIG. 32 illustrates an example of a JSON message format for an emergency handling message applicable to the emergency handling procedure of the fueling framework of FIG. 5.

The eleventh use case (UC11) for the emergency handling procedure, which may be adopted in the communication method for hydrogen fueling according to the present embodiment, may include defining safety-critical conditions that require an emergency response during hydrogen fueling, and including response processes for preventing safety-critical incidents.

For safe fueling, communication must exhibit behavior expected according to the protocol, and the fueling behavior must remain within the safe range of the fueling protocol. However, during fueling, issues may occur such that the fueling system-that is, the hydrogen fueling system-may reach a critical state that must be avoided at all costs. Accordingly, the emergency handling procedure may define safety-critical emergency conditions and possible responses to the emergency conditions and may provide important cases to be considered.

The fueling protocol may define emergency conditions related to the protocol, provide detection criteria and performance requirements, and prescribe response steps to ensure that harmful situations are not entered.

Specifically, while the hydrogen fueling procedure is being performed, if a high-pressure state that exceeds a predetermined threshold is detected by the mobility, for example from the vehicle tank, the mobility may send to the dispenser an emergency notification message including information requesting the stopping of fueling due to high pressure (e.g., "Emg: Stop (high pressure)"). The dispenser may send to the mobility a response message including information (e.g., "Emg: Stopping") indicating that fueling is being urgently stopped according to the emergency notification message.

Furthermore, after receiving the response message-either immediately or after a predetermined time has elapsed-the mobility may again send the emergency notification message to the dispenser. The dispenser may then send to the mobility a response message including information (e.g., "Emg: Stopped") indicating that fueling has been urgently stopped according to the emergency notification message.

Meanwhile, during the hydrogen fueling procedure, if hydrogen leakage is detected, the dispenser may send to the mobility an emergency notification message including information indicating that fueling is being urgently stopped due to leakage (e.g., "Emg: Stopping (leaking)"). The mobility may send to the dispenser a response message including information (e.g., "Emg: Confirmed") indicating that the emergency notification message has been normally received.

Furthermore, the dispenser may send to the mobility an emergency notification message including information indicating that fueling has been urgently stopped due to leakage (e.g., "Emg: Stopped (leaking)"). The mobility may then send to the dispenser a response message including information (e.g., "Emg: Confirmed") indicating that the emergency notification message has been normally received.

The emergency notification messages in each of the above examples may be referred to respectively as the first to third emergency notification messages.

According to the foregoing configuration, when a safety-critical situation is detected by the mobility or the dispenser, the mobility or the dispenser may take the necessary actions to ensure that hazardous situations or disasters do not occur and, if possible, may send to the other party an emergency notification message including information about the situation and may shut down communication.

When an emergency notification message is received, the mobility or the dispenser may respond according to the action indicated in the emergency notification message and may terminate communication without excessive delay. As illustrated in FIG. 32, an emergency notification message may include a header (hdr) and a message (msg) body connected to the header. The header may include attributes such as a timestamp (ts), a session identifier (sid), and a message identifier (mid) indicating that the message is an emergency notification (EmergencyNotif). The message may include values, information, or parameters regarding the class, type, and action of the emergency notification.

The above-described emergency notification messages may be transmitted as TLS or DTLS messages depending on the communication technology used.

The objective, brief description, preconditions, and postconditions of the eleventh use case (UC11) for the emergency handling procedure may be defined as illustrated in Table 29 below.

**[Table 29]**

| Type | Description |
|---|---|
| Use Case Name | UC11: "Emergency Handling" |
| Purpose | Defines safety-critical conditions that guarantee emergency response and specifies response procedures to prevent safety-critical incidents. |
| Overview | For safe fueling, the communication must show expected behavior according to the protocol, and fueling actions must remain within the safe range of the fueling protocol. |
| | However, if a problem occurs, there is a possibility that the fueling system may reach a critical state that must be avoided at all costs. This use case defines safety-critical emergency scenarios and possible responses, and provides best practices to be considered. |
| Pre-conditions | A safety-critical problem occurs during fueling and immediate response is required. |
| Post-conditions | A safety-critical event is avoided or minimized, and the fueling session is completely terminated. |

The fueling protocol may define emergency conditions according to the protocol and may provide pre-prescribed response procedures that can avoid entering a detrimental situation, the procedures including detection criteria, notification procedures, termination procedures, and fallback mechanisms. When the mobility or the dispenser detects a safety-critical situation, the necessary actions to prevent a catastrophic event may be performed. In addition, when possible, an emergency notification message including information on the event may be transmitted, and the communication may be closed. That is, when the mobility or the dispenser receives an emergency notification message, it may respond to the actions indicated in the message and may close the communication without delay. The emergency notification message may be a TLS or DTLS message, depending on the communication technology used. For the criticality of the message and the efficiency of delivery, the fueling protocol may be configured not to allow modification of the structure of the emergency notification message.

Element names included in the emergency notification message may include class, type, action, and the like, and may be defined as illustrated in Table 30 below. Elements not illustrated in Table 30 may be specified according to each fueling protocol specification, such as ISO 19885-3. For example, additional emergency reason codes and action codes may be individually specified for each protocol.

**[table 30]**

| Element Name | Type | Meaning |
|---|---|---|
| Class | unsignedByte | Optional: Severity class of the emergency situation. The range is from 1 to 5, and the lower the number, the lower the severity. |
| Type | unsignedByte | Pre-defined numbered emergency reason code. |
| Action | unsignedByte | Optional: Pre-defined action code that is required or recommended to be performed by the receiver. |

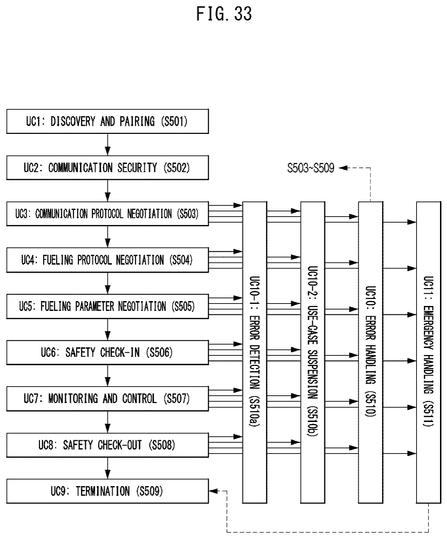

FIG. 33 illustrates a framework of functional blocks of a hydrogen fueling procedure to which the bidirectional communication method for hydrogen fueling according to another embodiment of the present invention may be applied. Referring to FIG. 33, the fueling framework, which is a framework of functional blocks of the hydrogen fueling procedure, may include: a first functional block for discovery and pairing (S501) of the first use case (UC1); a second functional block for communication security (S502) of the second use case (UC2); a third functional block for communication protocol negotiation (S503) of the third use case (UC3); a fourth functional block for fueling protocol negotiation (S504) of the fourth use case (UC4); a fifth functional block for fueling parameter negotiation (S505) of the fifth use case (UC5); a sixth functional block for safety check-in (S506) of the sixth use case (UC6); a seventh functional block for monitoring and control (S507) of the seventh use case (UC7); an eighth functional block for safety check-out (S508) of the eighth use case (UC8); a ninth functional block for termination (S509) of the ninth use case (UC9); a tenth-1 functional block for error detection (S510a) of the tenth-1 use case (UC10-1); a tenth-2 functional block for use-case suspension (S510b) of the tenth-2 use case (UC10-2); a tenth functional block for error handling (S510) of the tenth use case (UC10); and an eleventh functional block for emergency handling (S511) of the eleventh use case (UC11).

Except for the tenth-1 functional block for error detection (S510a) and the tenth-2 functional block for use-case suspension (S510b), the remaining functional blocks are substantially identical to the corresponding functional blocks of FIG. 5, and detailed descriptions thereof will thus be omitted.

The tenth-1 functional block for error detection (S510a) and the tenth-2 functional block for use-case suspension (S510b) may deliver their output values or output signals to the tenth functional block for error handling (S510) or to the eleventh functional block for emergency handling (S511), depending on the function performed or the result determined.

More specifically, the tenth-1 functional block may be configured to define a fallback mechanism that ensures downward compatibility among mutually interoperable mechanisms between the mobility and the dispenser in the fueling protocol when a non-safety-critical error is detected during the monitoring and control stage and fueling is interrupted before completion, and may operate to resume fueling based on the fallback mechanism. In this case, the fallback mechanism may be, for example, a non-communication fueling method.

Meanwhile, the tenth-1 functional block may operate so that, when a non-safety-critical error is detected during the monitoring and control stage and fueling is interrupted before completion, the mobility and the dispenser return to and re-perform some or all of the stages of communication protocol negotiation (S503), fueling protocol negotiation (S504), and fueling parameter negotiation (S505).

In this process, the mobility and the dispenser may reduce the information exchanged during the re-execution of some or all of the communication protocol negotiation (S503), fueling protocol negotiation (S504), and fueling parameter negotiation (S505), by utilizing the interoperability information obtained during the discovery and pairing stage.

For example, when a communication state or fueling state indicates that a previously negotiated and selected protocol can no longer be maintained, some or all of the communication protocol negotiation (S503), fueling protocol negotiation (S504), and fueling parameter negotiation (S505) may be performed again, excluding the protocol previously selected.

In addition, the tenth-1 functional block may function such that, when a non-safety-critical error caused by a change in communication environment or fueling infrastructure is detected during the monitoring and control stage and fueling is interrupted before completion, the mobility or the dispenser re-performs some or all of the communication protocol negotiation (S503), fueling protocol negotiation (S504), and fueling parameter negotiation (S505) with the counterpart.

Here, a change in communication environment may include a case in which a communication channel is disconnected. A change in communication environment may also include a case in which received data cannot be recognized, or a case in which the received data is in an unacceptable range. A change in communication environment may further include a case in which communication performance fails to meet the required level. A change in communication environment may also include a case in which the integrity or precision of the data exchanged through communication fails to meet the required level.

Furthermore, a change in fueling infrastructure may include a case in which fueling parameters on the mobility side change or are maintained based on the dispenser-side control parameters for fueling, but the change or maintenance of the mobility-side fueling parameters fails to meet the required level.

As described above, the tenth-1 functional block may detect various types of incidents or incident-related events that occur in the mobility or the dispenser while the third use case through the ninth use case are being performed. The detected incidents or events may be classified as errors when predetermined conditions are satisfied. When the error is a non-safety-critical error, the result of error detection is delivered to the functional block of the use-case suspension stage or the error-handling stage. When the error is a safety-critical error, the result of error detection may be handled by the use-case suspension stage and the emergency-handling stage.

In this embodiment, the criteria for classifying the error detected by the tenth-1 functional block as either a non-safety-critical error or a safety-critical error are predefined in the fueling protocol. Depending on the stage at which the error is detected and on the type of the classified error, the detected error may be categorized into a predetermined class or type.

In this embodiment, once an error is detected, it is delivered to the error-handling stage and/or the emergency-handling stage, and the functional blocks of these stages may classify a non-safety-critical error as one or more of a communication error, a system error, or a qualitative error.

Next, the tenth-2 functional block may determine whether the fueling process should be stopped based on the error state according to the received error information such as the classification result from the tenth-1 functional block. When it is determined that fueling is to continue without stopping, based on updated interoperability or compatibility information and according to a fallback fueling protocol, at least one processor of the fueling system may perform one of the third to eighth use cases again as a result of the error-handling stage, and thereby continue the fueling process.

As such, the tenth-2 functional block may be configured to determine whether to stop the communication process or hydrogen fueling process based on the error-detection result of the tenth-1 functional block, and accordingly stop the currently ongoing use case.

Meanwhile, the tenth-2 functional block may be configured to classify the detected error as either a safety-critical error or a non-safety-critical error according to the error-detection result of the tenth-1 functional block. When the error is classified as a non-safety-critical error, the tenth-2 functional block may classify the error as one of a communication error, a system error, or a qualitative error. When the error is classified as a safety-critical error, the tenth-2 functional block may deliver the detected error information and/or the classified error information to the eleventh functional block, which performs follow-up processing such as emergency handling (S511). A safety-critical error may be treated as an emergency.

In addition, the tenth-2 functional block may determine the criticality of the error based on the UCDC level of the available communication or fueling process with respect to the detected error. The tenth-2 functional block may also determine whether fueling should be stopped based on the UCDC level. The process of determining the error criticality and/or whether to stop fueling based on the UCDC level may be applied when the error is a qualitative error.

Criteria for determining whether an error is safety-critical may include whether an accident or incident that may occur before, during, or after hydrogen fueling can damage hydrogen fueling station facilities and/or human life, or cause fire, explosion, or leakage. In the case of a safety-critical error, communication and fueling may be stopped and/or terminated. Even in the case of a safety-critical error, when communication is still available or fueling remains possible, or when fueling must continue (for example, for evacuation from a danger zone or transport of a patient), fueling may continue. In the case of a non-safety-critical error, communication or fueling may be stopped based on the error's criticality/severity, available communication environment, available fueling protocol, UCDC level, and the necessity of communication or fueling.

In the above embodiments, the continuous monitoring of interoperability, updating interoperability information, and updating combinations of communication/fueling protocols have been described mainly with the mobility or the dispenser performing these processes; however, the detailed processes may be performed cooperatively by both the mobility and the dispenser. In this embodiment, a part of the continuous monitoring of interoperability, updating interoperability information, and updating combinations of communication/fueling protocols may be performed mainly by the mobility, while another part may be performed mainly by the dispenser.

The detection of an error may be performed by either the mobility or the dispenser, and the entity that detects the error may transmit to the counterpart a message including the detection of the error, the detected error, the stopping of communication and fueling based on the error, or a reason code corresponding to the reason for stopping.

According to this embodiment, the communication method for hydrogen fueling performed by the hydrogen mobility may include: a step (S510a) of detecting an error that occurs in the process of preparing hydrogen fueling between the mobility and the dispenser (S503 to S506), or in the process of the dispenser fueling hydrogen to the mobility (S507); a step (S510b) of suspending a use case of the communication process or the hydrogen fueling process based on the detected error; and an error-handling stage (S510) or an emergency-handling stage (S511) that is a pre-defined follow-up processing procedure configured to operate based on the detected error.

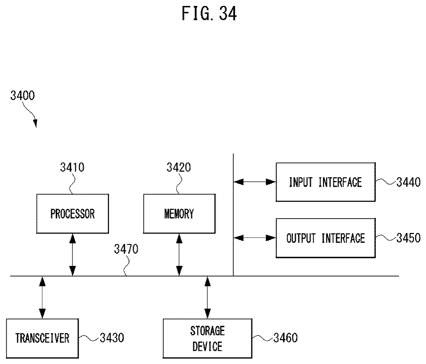

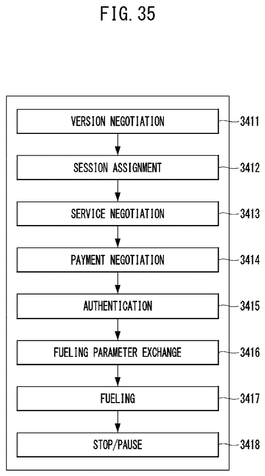

FIG. 34 is a conceptual block diagram of a computing system to which a hydrogen fueling communication apparatus according to another embodiment of the present invention may be applied. FIG. 35 is a block diagram illustrating software modules of the hydrogen fueling communication apparatus that may additionally be implemented in the computing system of FIG. 34.

Referring to FIG. 34, the computing system 3400 may include a communication device for hydrogen fueling, a communication control device, a communication architecture, and/or an electronic control unit, and may be mounted in a hydrogen mobility, a dispenser, and/or a fueling station. Although the computing system is omitted from the drawings in the foregoing embodiments, the processor and the memory may be electronically connected to the respective components, and the processor may be configured to control or manage the operations of the respective components. That is, at least a portion of the processes of the communication method for hydrogen fueling according to this embodiment may be executed by the computing system 3400.

The computing system 3400 may include one or more of processor 3410 or a memory 3420 storing instructions that direct the at least one processor 3410 to perform at least one step. The at least one step may be performed by the at least one processor 3410 loading the instructions from the memory 3420 and executing the instructions.

The computing system 3400 may further include a transceiver 3430 configured to transmit and receive signals or information through a communication interface that forms a wired or wireless channel and through a communication network connected to the communication interface. Furthermore, the computing system 3400 may further include an input interface 3440, an output interface 3450, and a storage device 3460. Each component included in the computing system 3400 may be connected to one another by a bus 3470 to thereby perform mutual communication.

The processor 3410 may refer to a central processing unit (CPU), a graphics processing unit (GPU), or a dedicated processor that performs the method according to the present embodiment.

Each of the memory 3420 and the storage device 3460 may be composed of one or more of a volatile storage medium or a non-volatile storage medium. For example, the memory 3420 may include one or more of a read-only memory (ROM) or a random access memory (RAM).

Referring to FIG. 35, the computing system 3400 may further include, in addition to the functional blocks (UC1 through UC11) described above with reference to FIG. 5 or FIG. 31, additional functional blocks 3411 through 3418. These functional blocks 3411 through 3418 may be mounted in the computing system 3400, which includes a hydrogen fueling communication device or a hydrogen fueling control device.

The above-described additional functional blocks 3411 through 3418 may include a first functional block 3411 for version negotiation, a second functional block 3412 for session assignment, a third functional block 3413 for service negotiation, a fourth functional block 3414 for payment negotiation, a fifth functional block 3415 for authentication, a sixth functional block 3416 for fueling parameter exchange, a seventh functional block 3417 for fueling, and an eighth functional block 3418 for stop/pause.

The first functional block 3411 may check and compare the versions of communication protocols that can be used for all fueling protocols during handshake. In addition, the first functional block 3411 may check a TLS version and the like.

The second functional block 3412 may assign an IP address, an IPv6 address, a session identifier, etc., by the vehicle or the dispenser.

The third functional block 3413 may negotiate services applied to a hydrogen electric vehicle based on price, user convenience, and the like, when service items such as charging fees differ by region, time zone, or service provider in hydrogen fueling.

The fourth functional block 3414 may determine a payment method for hydrogen fueling and may process the payment procedure.

The fifth functional block 3415 may process one or more of user authentication, vehicle authentication, dispenser authentication, or hydrogen fueling station authentication. The fifth functional block 3415 may correspond to at least a portion of the functional block of the discovery and pairing use case (UC1).

The sixth functional block 3416 may correspond to at least a portion of the functional block of the fueling parameter negotiation use case (UC5).

The seventh functional block 3417 may be a functional unit for initiating, monitoring, and controlling fueling, and may correspond to at least a portion of the monitoring and control use case (UC7). In addition, the seventh functional block 3417 may correspond to at least a portion of the combination of the safety check-in use case (UC6), the monitoring and control use case (UC7), the safety check-out use case (UC8), and the termination use case (UC9).

The eighth functional block 3418 is for stopping or pausing a use case, or stopping or pausing a fueling and/or communication function, during normal fueling, or during error handling or emergency handling according to error detection, and may correspond to at least a portion of the combination of the error-handling use case (UC10) and the emergency-handling use case (UC11).

Additionally, the above-described computing system 3400 may be implemented as various types of computing devices mounted in a vehicle or a dispenser. Examples of such computing devices include a communication-capable desktop computer, a laptop computer, a notebook, a smart phone, a tablet PC, a mobile phone, a smart watch, a smart glass, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

Meanwhile, although in most of the foregoing embodiments the description has focused on a configuration in which the vehicle first transmits its communication protocol or parameters to the dispenser, the present invention is not limited thereto and may instead be configured such that the dispenser first transmits its communication protocol or parameters to the vehicle. In such a case, it is apparent that the sender becomes the receiver and the receiver becomes the sender, but the substantial features remain the same.

The operations of the method according to the embodiments of the present invention may be implemented as a computer-readable program or code stored on a computer-readable recording medium. The computer-readable recording medium includes all kinds of recording devices on which information readable by a computer system is stored. In addition, the computer-readable recording medium may have computer-readable programs or codes stored and executed in a distributed manner across computer systems connected via a network.

The computer-readable recording medium may include hardware devices that are specially configured to store and execute program instructions, such as ROM, RAM, and flash memory. The program instructions may include machine code generated by a compiler and high-level language code executable by a computer using an interpreter.

Some aspects of the present invention have been described in the context of an apparatus; however, such description may also represent the corresponding method according to the invention, where a block or an apparatus corresponds to a method step or a feature of a method step. Similarly, aspects described in the context of a method may be presented as the corresponding block, item, or feature of a corresponding apparatus. Some or all of the method steps may be performed by (or using) hardware devices such as a microprocessor, a programmable computer, or an electronic circuit. In some embodiments, at least one of the most essential method steps may be performed by such devices.

In the embodiments, a programmable logic device (e.g., a field-programmable gate array) may be used to perform some or all of the functions of the methods described herein. In the embodiments, a field-programmable gate array may operate together with a microprocessor for performing one of the methods described herein. In general, the methods are preferably performed by some kind of hardware device.

While the preferred embodiments of the present invention have been described above with reference to the accompanying drawings, it will be understood by those skilled in the art that various modifications and changes may be made to the invention without departing from the spirit and scope of the invention as defined by the claims that follow.

## Claims

1. A bidirectional communication method for hydrogen fueling performed by hydrogen mobility, the method comprising:
negotiating, with a dispenser that supplies hydrogen to the hydrogen mobility, a communication protocol for a process of supplying hydrogen to the mobility, based on interoperability or compatibility information identified in advance between the dispenser and the mobility;
negotiating, with the dispenser, fueling protocols for hydrogen fueling;
negotiating, with the dispenser, fueling parameters based on the negotiated fueling protocols; and
monitoring a start of the hydrogen fueling and a state of the hydrogen fueling through a fueling loop request message and a fueling loop response message, based on the negotiated fueling protocols and the negotiated fueling parameters.

2. The method of claim 1, wherein, in the monitoring, the fueling loop request message comprises a field for a current action and a field indicating a reason for the current action, and wherein the hydrogen fueling is started according to preset information of the field for the current action.

3. The method of claim 2, wherein, in the monitoring, the fueling loop response message comprises fields indicating a state, a reason, and a result for the current action, wherein the state field comprises information indicating that a current state corresponds to fueling, and the result field comprises information indicating that a monitoring result or a control state is normal.

4. The method of claim 3, wherein the monitoring comprises transmitting, to the dispenser, a message including information regarding a fueling loop of the hydrogen mobility, and receiving, from the dispenser, a message including information regarding a fueling loop of the dispenser corresponding to the fueling loop of the mobility.

5. The method of claim 3, wherein the monitoring comprises transmitting, to the dispenser, a fueling control request message including information for delaying fueling or reducing a unit fueling amount, and receiving, from the dispenser, a response message including information indicating a decrease or reduction of a fueling state or fueling speed.

6. The method of claim 3, wherein the monitoring comprises transmitting, to the dispenser, a fueling control request message requesting stop of fueling, and receiving, from the dispenser, a fueling state response message including information indicating that fueling is being stopped.

7. The method of claim 3, wherein the monitoring comprises transmitting, to the dispenser, information or parameters regarding a current tank temperature and a current tank pressure of the hydrogen mobility, and receiving, from the dispenser, parameters related to one or more of fueling start, fueling stop, ramping up, ramping down, or a current injection pressure.

8. The method of claim 3, wherein the monitoring comprises transmitting, to the dispenser, information or parameters regarding start, pause, resume, or terminate of fueling.

9. The method of claim 1, further comprising detecting an error occurring in a communication process for preparing the hydrogen fueling or in a process in which the dispenser supplies hydrogen to the hydrogen mobility, wherein the detected error is classified as a safety-critical error or a non-safety-critical error.

10. The method of claim 9, further comprising:
determining, based on the detected error, whether to stop the communication process or the process of supplying hydrogen; and
transmitting, to the dispenser, a message including information regarding whether to stop the communication process or the process of supplying hydrogen.

11. The method of claim 9, further comprising performing an error-handling procedure, based on the detected error being the non-safety-critical error, wherein the performing of the error-handling procedure comprises classifying the detected error as one or more of a communication error, a system error, or a qualitative error.

12. The method of claim 11, further comprising determining whether to replace a first fueling protocol used for the communication process or the hydrogen fueling process with a fallback second fueling protocol, based on the detected error being the non-safety-critical error.

13. The method of claim 9, further comprising performing an emergency-handling procedure, based on the detected error being the safety-critical error.

14. A bidirectional communication method for hydrogen fueling performed by a dispenser that supplies hydrogen to hydrogen mobility or by a hydrogen fueling station including the dispenser, the method comprising:
negotiating, with the hydrogen mobility and based on interoperability or compatibility information identified in advance, a communication protocol for a process of supplying hydrogen to the mobility;
negotiating, with the hydrogen mobility, fueling protocols for hydrogen fueling;
negotiating, with the hydrogen mobility, fueling parameters based on the negotiated fueling protocols; and
monitoring a start of the hydrogen fueling and a state of the hydrogen fueling through a fueling loop request message and a fueling loop response message, based on the negotiated fueling protocols and the negotiated fueling parameters.

15. The method of claim 14, wherein, in the monitoring, the fueling loop request message comprises a field for a current action and optionally comprises a field indicating a reason for the action, and wherein the hydrogen fueling is started according to preset information of the field for the action.

16. The method of claim 15, wherein, in the monitoring, the fueling loop response message comprises fields indicating a state, a reason, and a result for the current action, wherein the state field comprises information indicating that the current state corresponds to fueling, and the result field comprises information indicating that a monitoring result or a control state is normal.

17. The method of claim 14, further comprising controlling parameters including a pressure ramp rate or an average pressure ramp rate, based on information from the hydrogen mobility, to control a fueling rate in the hydrogen fueling.

18. The method of claim 14, further comprising detecting an error occurring in a communication process for preparing the hydrogen fueling or in a process in which the dispenser supplies hydrogen to the hydrogen mobility, wherein the detected error is classified as a safety-critical error or a non-safety-critical error.

19. The method of claim 18, further comprising receiving, from the hydrogen mobility, a message including information or parameters indicating whether to stop the communication process or the hydrogen fueling process based on the detected error.

20. The method of claim 18, further comprising performing an error-handling procedure, based on the detected error being the non-safety-critical error, wherein performing the error-handling procedure comprises classifying the detected error as one or more of a communication error, a system error, or a qualitative error.

21. The method of claim 20, further comprising determining whether to replace a first fueling protocol used for the communication process or the hydrogen fueling process with a fallback second fueling protocol, based on the detected error being the non-safety-critical error.

22. The method of claim 20, further comprising performing an emergency-handling procedure, based on the detected error being the safety-critical error.

23. A hydrogen fueling bidirectional communication device disposed in hydrogen mobility, the device comprising:
a processor executing at least one instruction,
wherein the processor is configured to:
negotiate, with a dispenser that supplies hydrogen to the hydrogen mobility and based on interoperability or compatibility information identified in advance, a communication protocol for a process of supplying hydrogen to the mobility;
negotiate, with the dispenser, fueling protocols for hydrogen fueling;
negotiate, with the dispenser, fueling parameters based on the negotiated fueling protocols; and
monitor a start of the hydrogen fueling and a state of the hydrogen fueling through a fueling loop request message and a fueling loop response message, based on the negotiated fueling protocols and the negotiated fueling parameters.

24. The communication device of claim 23, wherein the fueling loop request message comprises a field for a current action and a field indicating a reason for the action, and wherein the hydrogen fueling is started according to preset information of the field for the action; and wherein the fueling loop response message comprises fields indicating a state, a reason, and a result for the current action, and the state field comprises information indicating that the current state corresponds to fueling, and the result field comprises information indicating that a monitoring result or a control state is normal.

25. The communication device of claim 24, wherein the processor is further configured to:
detect an error occurring in a communication process for preparing the hydrogen fueling or in a process in which the dispenser supplies hydrogen to the hydrogen mobility;
determine, based on the detected error, whether to stop the communication process or the hydrogen fueling process;
perform an error-handling procedure, based on the detected error being a non-safety-critical error; and
perform an emergency-handling procedure, based on the detected error being a safety-critical error;
wherein, in the detecting or determining, the detected error is classified as a safety-critical error or a non-safety-critical error,
wherein the performing of the error-handling procedure comprises classifying the detected error as one or more of a communication error, a system error, or a qualitative error, based on the detected error being a non-safety-critical error, and
wherein the performing of the error-handling procedure further comprises determining whether to replace a first fueling protocol used for the communication process or the hydrogen fueling process with a fallback second fueling protocol, based on the detected error being a non-safety-critical error.
